# EUROPEAN PATENT APPLICATION

(11) **EP 4 290 410 A2**
(43) Date of publication of application: **13.12.2023**
(21) Application number: 23020089.1
(22) Date of filing: 24.02.2023
(51) Int. Cl.: G06K 19/077, G06K 17/00, G01G 19/42, G01G 19/52, G06Q 10/087

(54) **COMMUNICATING WEIGHT SENSOR UNITS, ASSET TAGS AND DISPENSING UNITS AND ENCLOSURES, AND TECHNIQUES FOR USING SAME**

(30) Priority: 23.02.2022 GB 202202511; 24.02.2022 GB 202202585
(71) Applicant: Inventor-e Limited, Solihull, West Midlands B90 8AJ (GB)
(72) Inventor: HENRY, Dean Charles, Solihull B93 0BU (GB)
(74) Representative: Reynolds, Julian David

(57) **Abstract**

A system for monitoring the presence and/or quantity of stock items in a dispensing enclosure having a cabinet controller. The system further comprises a wireless portable device and a central control computer. The wireless portable device receives (s1710) a WSU ID for a newly installed weight sensor unit, and send (s1712) a first notification message (including the WSU ID and indicating that the WSU is in the dispensing enclosure) to the central control computer. The central control computer is configured to send (s1716) a second notification message to the cabinet controller indicating that the WSU is in the dispensing enclosure. The cabinet controller transmits (s1720) a first optical signal using an optical transmitter in response to a door close signal. The WSU, in response to receipt of the first optical signal, wirelessly transmits a first weight sensor reading to the cabinet controller.

## Description

The present invention relates to electronic stock or asset monitoring techniques, and more particularly to communicating weight sensor units, asset tags and dispensing units and enclosures, and techniques for using same.

In various environments it is desirable to detect conditions or take measurements relating to objects or attributes of the objects, i.e., using electronic measurement devices that include sensors. Such devices may be found in factories or production sites, or any environment in which attributes of the object(s) may change over time, such as a quantity of objects or items sensed. It is then conventional for the measurements to be used, often by being communicated to a controller, possibly a remote server, by a communications network; and the controller may operate responsive to the sensed measurements.

In a case where electronic measurement devices are used to take measurements such as a quantity of objects or items, a problem with such systems is that some organisations have thousands of objects or items across their sites, and/or have numerous electronic measurement devices which may be spread across one or multiple locations within a site, and/or across numerous sites. The electronic measurement devices are integrated into the infrastructure of a site by wired and essentially permanent connections, and the process of setting up the electronic measurement devices, and/or removing and reconfiguring them, is onerous, inflexible and time consuming. This is particularly the case where the electronic measurement devices comprise weight sensor units including potentially delicate electronic sensors.

It is known to provide for dispensing and return of assets or stock items from containers such as bins, from dispensing cabinets (which may be secure/lockable), and from bins contained within such cabinets.

There is a need for arrangements whereby reconfiguration of weight sensor units is flexible and readily facilitated, and/or whereby they can remain in operation for prolonged periods.

There is a need for arrangements whereby access is restricted/controlled (e.g., by door or lid) not just at a cabinet level but also at the level of the container itself. There is also a need for arrangements whereby assets can be separated into, and dispensable only from, respective compartments of a container. There is also a need for arrangements whereby a container can be moved to a different location and/or reconfigured, so as to provide flexibility as a whole with respect to the overall dispensing arrangement. With respect to the latter, there is a need for arrangements that can nevertheless remain in operation for prolonged periods.

There is a need for arrangements whereby asset tags can remain in operation for prolonged periods.

There is a need for arrangements whereby asset tags, dispensing units and dispensing cabinets facilitate recording of the assets removed by, or returned by, a user.

### BRIEF SUMMARY

In one aspect, there is provided a system for monitoring the presence and/or quantity of stock items in a dispensing enclosure, the system comprising: the dispensing enclosure, the dispensing enclosure having a cabinet controller and having one or more dispensing units or one or more weight sensor units, WSU, disposed therein, the or each weight sensor unit being configured to wirelessly transmit using a transmission device one or more weight sensor readings indicative of the weight being supported by the weight sensor unit, the dispensing unit comprising a container configured to receive or support the stock items and a weight sensor unit configured to support, in use, the container; a wireless portable device having a first processor, a short-range wireless transceiver and a long-range wireless transceiver; a central control computer coupled to the cabinet controller and to the long-range wireless transceiver via one or more networks; wherein the first processor is configured to: in response to the wireless portable device being tapped on or placed in proximity to a short-range wireless transceiver of a weight sensor unit, receive a WSU ID for that weight sensor unit; and send a first notification message to the central control computer, the notification message including the WSU ID and indicating that the WSU associated with the WSU ID is in the dispensing enclosure; wherein the central control computer is configured to, in response to receiving the first notification message, send a second notification message to the cabinet controller indicating that the WSU associated with the WSU ID is in the dispensing enclosure; wherein the cabinet controller is configured to: detect a door close signal in response to a door of the dispensing enclosure being closed, and transmit a first optical signal using an optical transmitter; wherein the WSU associated with the WSU ID is configured to, in response to receipt thereby of a first optical signal, wirelessly transmit a first weight sensor reading to the cabinet controller.

In an embodiment, the first processor is configured to, prior to or after receiving (s1710) the WSU ID, receive a user selection of a cabinet ID corresponding to the dispensing enclosure, after displaying a new WSU configuration screen on a display of the wireless portable device. In an embodiment, the first processor is configured to, prior to or after receiving user selection of the cabinet ID, receive a user selection of a product ID in the new WSU configuration screen, the product ID corresponding to stock items in a container supported by the WSU.

In an embodiment, the first notification message further comprises (i) a device ID of the wireless portable device and/or (ii) the cabinet ID, and optionally the time and date of installation of the WSU in the enclosure.

In an embodiment, the central control computer is configured to, in response to receiving the first notification message: extract the cabinet ID and the WSU ID, and optionally the product ID and optionally the time and date of installation; and/or wherein the second notification message comprises the WSU ID and an indicator indicating that the WSU associated with the WSU ID is in the dispensing enclosure, and optionally the product ID and optionally the time and date of installation.

In an embodiment, the dispensing enclosure includes an internal gateway, and signals or messages are received by the cabinet controller from the transmission device of any WSUs, including the newly installed WSU, via the internal gateway.

In an embodiment, the cabinet controller is configured to, in response to receiving the first notification message, store in a local memory device the WSU ID and an indicator indicating that the WSU associated with the WSU ID is in the dispensing enclosure, and to optionally store in a local memory device the product ID and optionally the time and date of installation.

In an embodiment, the cabinet controller is configured to, after receipt of the first weight sensor reading from the WSU: construct a new WSU received message, the new WSU received message comprising the WSU ID and the first weight sensor reading, and optionally the temperature and battery level of the WSU; and send (s1728) the new WSU received message to the central control computer. In an embodiment, the central control computer is configured to store in a local database thereof the first weight sensor reading in association with the WSU ID and optionally in association with a cabinet ID of the dispensing enclosure, the first weight sensor reading being an initial weight sensor reading for the WSU at installation.

In another aspect, there is provided a wireless portable device for use in the system of any of the preceding paragraphs (or disclosed otherwise herein), the wireless portable device comprising: a first memory configured for storage of programs and data; a display configured for displaying graphical data; an input device configured to receive user inputs; an output device configured to output visual or audible alerts; the short-range wireless transceiver; and a first processor, the first memory, display, input device and short-range transceiver being connected to the first processor wherein the first processor is configured to: in response to the wireless portable device being tapped on or placed in proximity to a short-range wireless transceiver of a weight sensor unit, receive a WSU ID for that weight sensor unit; and send a first notification message to the central control computer, the notification message including the WSU ID and indicating that the WSU associated with the WSU ID is in the dispensing enclosure.

In another aspect, there is provided a weight sensor unit, WSU, for use in the system of any of the preceding paragraphs (or disclosed otherwise herein), the weight sensor unit comprising: a weight sensor configured to output weight sensor readings indicative of the weight being supported by the weight sensor; a transmission device configured to transmit wireless signals; an optical sensor configured to output electrical signals in response to the receipt of optical signals; and a short-range wireless transceiver; a second processor, coupled to the weight sensor, optical sensor and the transmission device; and a battery, wherein at least the weight sensor, optical sensor, transmission device, short-range wireless transceiver and second processor are powered by the battery; wherein the second processor is configured to: in response to the wireless portable device being tapped on or placed in proximity to the shortrange wireless transceiver, transmit (s1710) the WSU ID of the weight sensor unit; receive a first electrical signal from the optical sensor in response to the receipt thereby of a first optical signal; receive a first weight sensor reading output by the weight sensor, and wirelessly transmit the first weight sensor reading using the transmission device.

In an embodiment, the second processor is configured to: receive a second electrical signal from the optical sensor in response to the receipt thereby of a second optical signal; and after receipt of the second electrical signal, transmit a second weight sensor reading wirelessly using the transmission device.

In embodiments, (i) the transmission device is configured to be operated in one of at least a first state in which the transmission device consumes power P1, and in a second state, in which the transmission device consumes power P2, wherein P2 is greater than P1, and preferably wherein the second processor is configured to switch the transmission device from the first state to the second state only after only after receipt (i) the first optical signal and/or (ii) the second optical signal, and preferably wherein in the first state the transmission device is in deactivated mode, and in the second state the transmission device is in activated mode whereby it is able to transmit the wireless signals, and preferably wherein (i) the transmission device is a Bluetooth Low Energy (BLE) transmitter, and the wireless signals are BLE signals or (ii) the transmission device is an ultra-wide band (UWB) transmitter, and the wireless signals are UWB signals.

In another aspect, there is provided a dispensing enclosure for use in the system of any of the preceding paragraphs (or disclosed otherwise herein), the dispensing enclosure comprising: a housing; one or more shelves mounted internally within the housing; one or more of the weight sensor units according to any of claims 11 to 13, disposed on one or more of the shelves; a door mounted on the housing, whereby the door is openable and closable by a user; a door sensor configured to output (i) a door open signal in the event of the door transitioning from closed to open and/or (ii) a door close signal in the event of the door transitioning from open to closed; an optical transmitter configured to transmit optical signals; and a cabinet controller, the controller being connected to the door sensor and to the optical transmitter; wherein the controller is configured to receive the door close signal; in response to receipt of the door close signal, transmit a first and/or second optical signal using the optical transmitter.

In another aspect, there is provided a system for monitoring the presence and/or quantity of stock items in a dispensing enclosure, the system comprising: the dispensing enclosure having a cabinet controller and having one or more dispensing units or one or more weight sensor units disposed therein, the or each weight sensor unit (WSU) being configured to wirelessly transmit using a transmission device one or more weight sensor readings indicative of the weight being supported by the weight sensor unit, the dispensing unit comprising a container configured to receive or support the stock items and a weight sensor unit configured to support, in use, the container; a central control computer coupled to the cabinet controller via one or more networks; wherein the cabinet controller is configured to, in response to a door of the dispensing enclosure being closed for a first time, transmit a first optical signal using an optical transmitter; wherein a weight sensor unit is configured to, in response to receipt thereby of the first optical signal, wirelessly transmit a first weight sensor reading to the cabinet controller; wherein the cabinet controller is configured to, in response to a door of the dispensing enclosure being closed for a second time, transmit a second optical signal using an optical transmitter; wherein a weight sensor unit is configured to, in response to receipt thereby of the second optical signal, wirelessly transmit a second weight sensor reading to the cabinet controller; wherein the cabinet controller is configured to, after receipt of the second weight sensor reading, transmit an activity record message to the central control computer, the activity record message being based on at least the second weight sensor reading and comprising (i) a WSU ID of the weight sensor unit and (ii) a current quantity of stock items calculated from the second weight sensor reading and optionally a previous quantity of stock items calculated from the first weight sensor reading, and (iii) optionally one, a subset or all of a temperature of the WSU, a battery charge status of the WSU and the second weight sensor reading.

Embodiments of the invention will now be described in detail, by way of example, with reference to the accompanying drawings, in which:

### BRIEF DESCIPTION OF THE DRAWINGS

**Figure 1** is a schematic diagram illustrating a distributed stock dispensing, monitoring and/or and tracking system in which techniques according to embodiments of this disclosure can be used;
**Figure 2** shows one of the dispensing stations 106a of Fig. 1, according to an embodiment;
**Figure 3(a)** is a block diagram of the internal electronics of one of the weight sensor units 122a of Fig. 1, in an embodiment, Fig. 3(b) is a block diagram of the internal electronics of one of the weight sensor units 122a of Fig. 1, in an alternative embodiment, and **Fig. 3(c)** is a schematic block diagram of the internal electronics of the (external) gateway 108a to 108f of Fig. 1, in an embodiment;
**Figures 4(a) to 4(h)** show various views of a dispensing unit 120a and a weight sensor unit 122a of Fig. 2, according to embodiments;
**Figure 5** is an exploded perspective view of the weight sensor unit 122a of Fig. 2, in an embodiment;
**Figures 6(a) to 6(e)** show various views of a dispensing unit 120a and a weight sensor unit 122a of Fig. 2, according to embodiments, illustrating a battery compartment of the weight sensor unit 122a;
**Figure 7** is a flow chart of the operations performed by a processor 302 (Fig. 3) of the or each weight sensor unit 122, in an embodiment;
**Figures 8(a) to 8(h)** show various views of a dispensing unit 702a and a weight sensor unit 122a of Fig. 2, according to different embodiments, in which a dispensing unit 702 has a different form of container 704a including one or more bin lids 706a, 708a; and Fig. 8(i) is a block diagram of the internal electronics of a weight sensor unit 122a for use with the lidded bin of Figs **8(a) to 8(h)****,** in an embodiment;
**Figure 9(a)** is a flow chart of the operations performed by a processor 302 (Fig. 3) of the or each weight sensor unit 122, in an embodiment; **Fig. 9(b)** is a flow chart of the operations performed in an issue/return process, in an embodiment; and **Fig. 9(b)** is a flow chart of the operations performed in an issue/return process involving multi-compartment configurations, in an embodiment;
**Figure 10(a)** is a front view of a dispensing enclosure (cabinet 1000) according to an embodiment, and Fig. 10(b) is a schematic block diagram of the internal electronics of the cabinet 1000 of Fig. 10(a), in an embodiment, **Fig. 10(c)** is a perspective view of the cabinet 1000 of Fig. 2(a), **Fig. 10(d)** is a perspective view of a cabinet 1000 in another embodiment,
**Figs 10(e) to 10(g)** are perspective views of the cabinet 1000' of Fig. 2(d) in various states (e.g. open/closed), and **Fig. 10(h)** is a schematic block diagram of the internal electronics of the cabinet 1000 of any of Figs 10(c) to 10(g), in another embodiment;
**Figure 11 (a)** is a flow chart of the operations performed by a controller 1012 (Fig. 1 0(b)) of the cabinet 1000, in an embodiment; and **Figure 11 (b)** is a flow chart of the operations performed by a processor 302 (Fig. 3) of the or each weight sensor unit 122, in an embodiment;
**Figure 12** illustrates the internal configuration of an electronic device (portable wireless device) 201 of Fig. 2, in an embodiment;
Figure 13(a) is a perspective view of an asset tag according to an embodiment, and Figure 13(b) is a block diagram of the electronics of the asset tag of Fig. 13(a);
**Figure 14(a)** shows the operations performed at the cabinet controller (R-Pi) - Gateway, Cloud based software / CCC, App (PDA/wireless portable device) and a WSU newly inserted in the cabinet in an embodiment, in an initial operation; and **Figure 15(b)** shows the operations performed at those devices in a subsequent (weight sensing /quantity determination) operation;
**Figures 15(a) and 15(b)** are perspective views of a multi-compartment dispensing unit in an embodiment, in a case of a 6x4 array of compartments (bins); and **Figure 15(c)** is an enlarged perspective view of the multi-compartment dispensing unit of Figures 15(a) and 15(b);

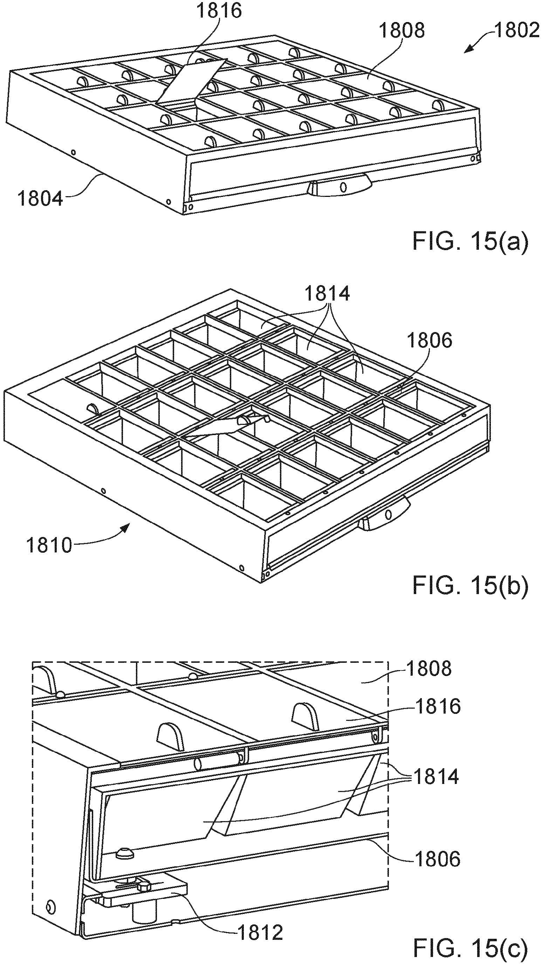

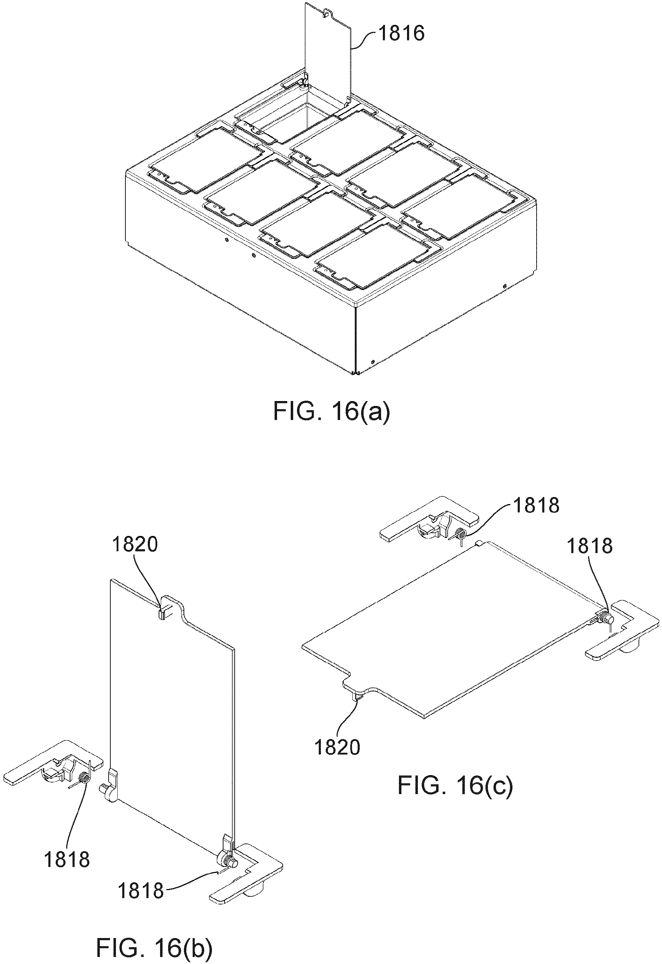

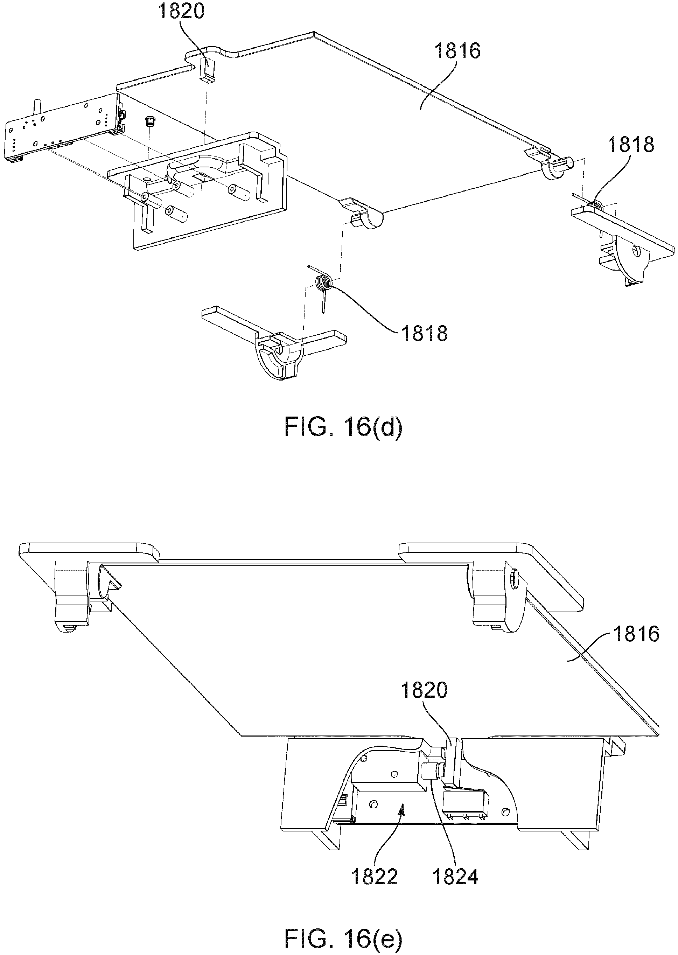

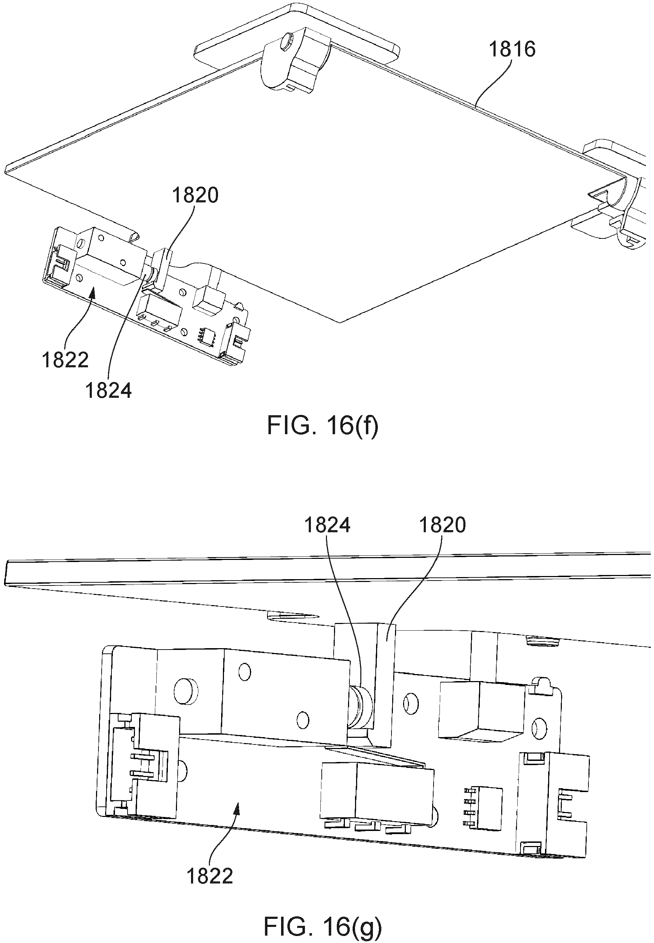

**Figure 16(a)** is a perspective view of a multi-compartment dispensing unit in an embodiment, in a case of a 4x2 array of compartments (bins); **Figures 16(b) and 16(c)** is an enlarged perspective view of the hinge assembly of the multi-compartment dispensing unit of Fig. 15(a), showing the lid in open and closes positions, respectively; **Figure 16(d)** is an exploded front perspective view from below of the multi-compartment dispensing unit of Fig. 15(a); **Figures 16(e)** **and** **16(f)** are rear perspective views from below of the multi-compartment dispensing unit of Fig. 16(a); **Figure 16(g)** is an enlarged perspective view of the compartment circuitry (PCB) of the multi-compartment dispensing unit of Fig. 16(a);
**Figure 17(a)** is a high-level diagram of a system for monitoring the presence and/or quantity of stock items or assets held in a dispensing enclosure (e.g., a cabinet) housing one or more multi-compartment dispensing units of Figs 15 and 16, in an embodiment; and **Figure 17(b)** is a block diagram of the electronics of the dispensing unit circuitry and the compartment circuitry of one compartment, in an embodiment;
**Figure 18** shows the operations performed at the cabinet controller (R-Pi) - Gateway, a PDA (App) /wireless portable device, a WSU (compartment processing circuitry), the Shelf controller (dispensing unit processing circuitry) and at the CCC (cloud-based software) in a weight sensing /quantity determination process, in an embodiment; and
**Figure 19** shows the operations performed at the asset tag, cabinet controller (R-Pi) - Gateway and optionally a PDA (App) / wireless portable device in a mode control process, in an embodiment.

### DETAILED DESCRIPTION

In the following, like numerals will be used to denote like elements. Unless indicated otherwise, any individual design features, components or steps mentioned herein (e.g., in relation to one embodiment) may be used in combination with any other features, components or steps disclosed herein (e.g., in relation to one or more other embodiments).

Embodiments of this disclosure concern systems and methods for providing monitoring of quantities of stock or assets in an accurate and preferably secure manner, in storage environments where hand-portable stock items can be stored and accessed by a user or, more typically, a multitude of different users or employees. Such storage environments are typically found at manufacturing, construction, aerospace, healthcare and other sites. The assets may include tools, consumable materials, and single-use and reusable items. As used herein, "stock item", "item", "product" and "asset" may be used interchangeably; and assets may be referred to generally as "indirect materials" or "inventory".

However, it will be appreciated that techniques according to embodiments of this disclosure may be used in other settings and for other purposes, such where it is desirable to detect conditions or take measurements relating to objects or attributes of the objects, e.g., temperature and pressure sensing, or in the monitoring of the presence or absence of objects or persons.

As noted, in the case of monitoring of quantities of stock or assets, a problem with such systems is that some organisations have thousands of stock items across their sites, accessible via numerous (wired) dispensing units (which are or include bins for the assets) spread across one or multiple locations within a site, and/or across numerous sites, and the process of setting up monitoring and/or tracking of at least removal of stock items by any of numerous users is onerous, inflexible and time consuming.

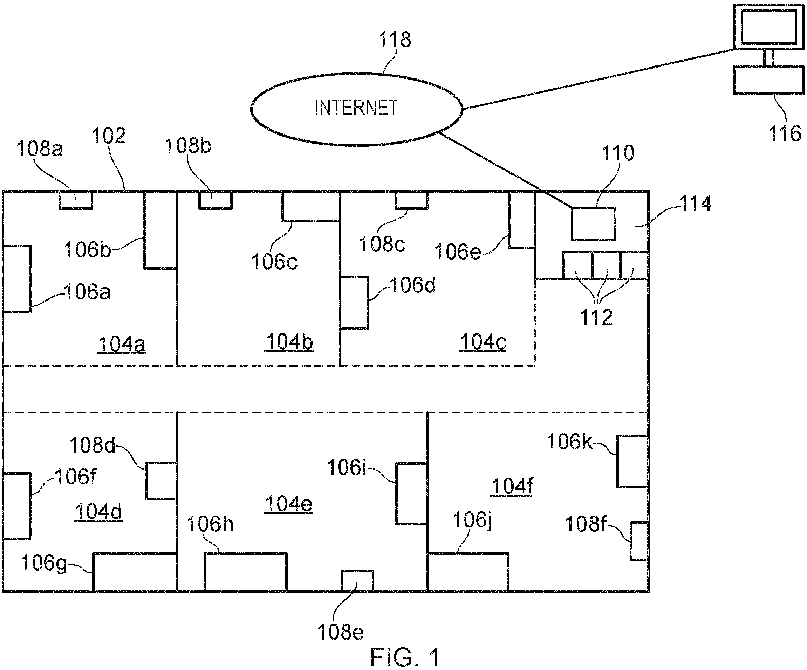

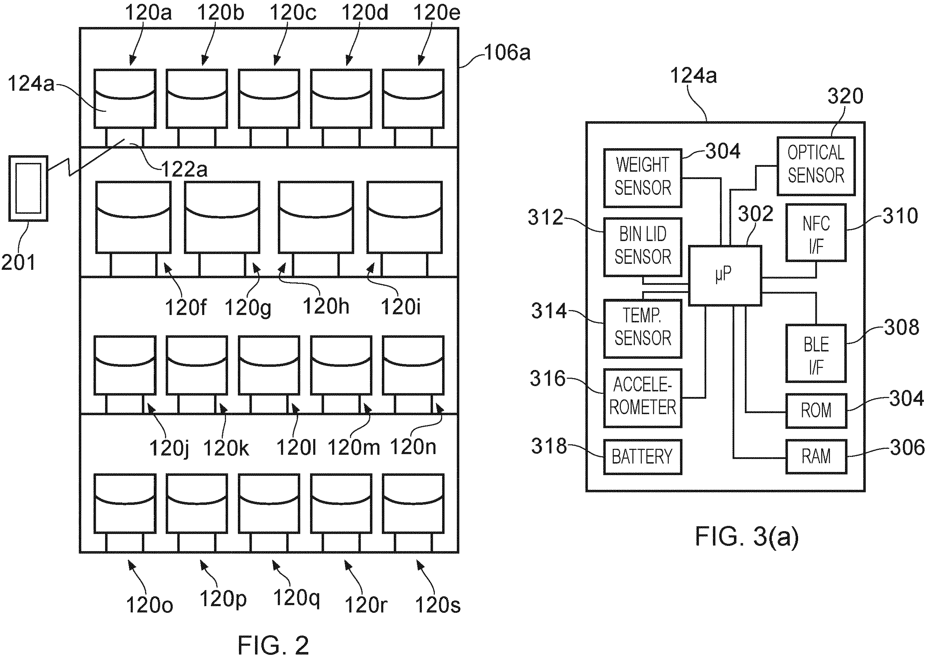

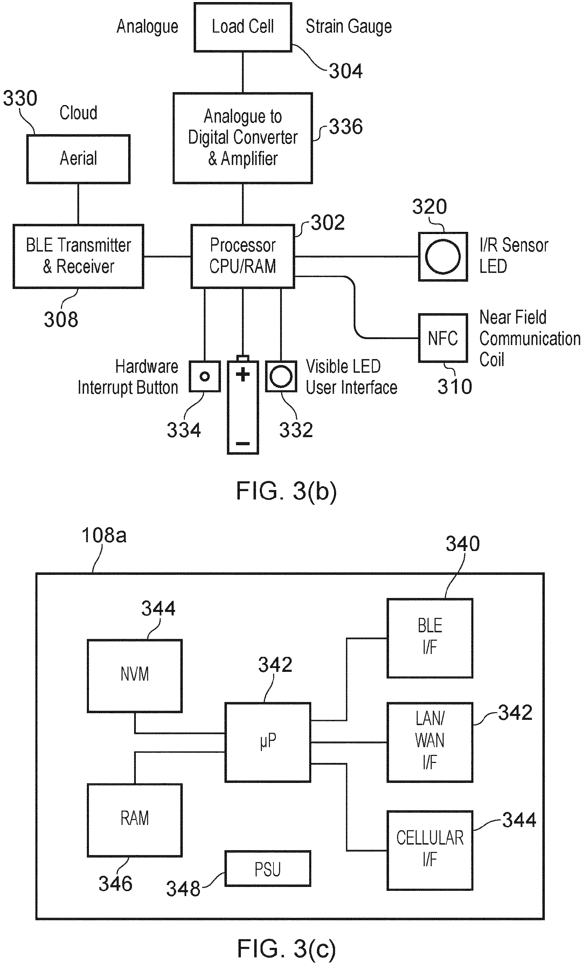

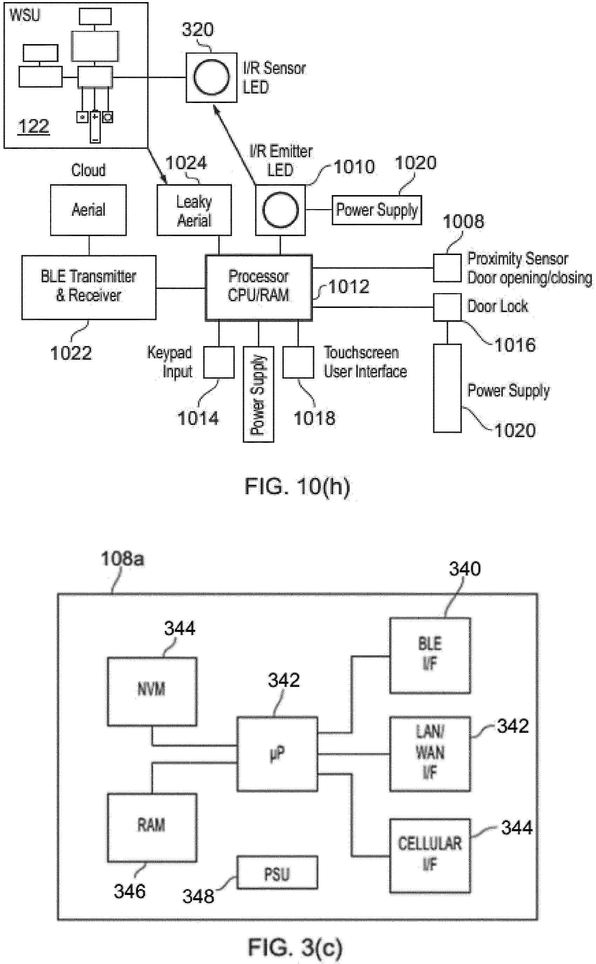

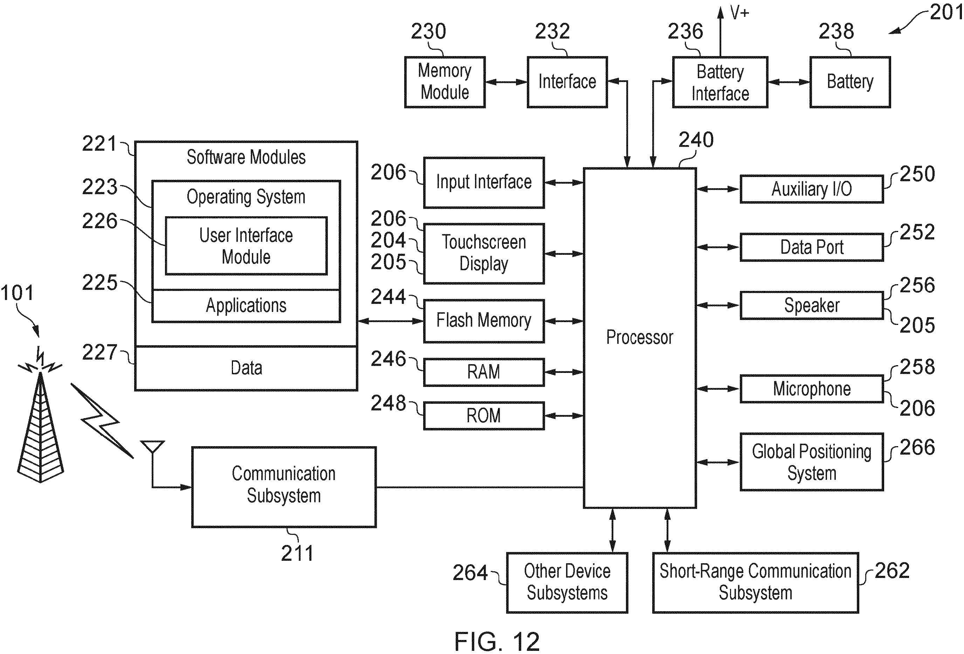

As used herein, (i) "App" means an application running on the portable wireless device 201 (Fig. 12) and configured to implement one or more of the techniques illustrated and/or described herein, (ii) "NFC device" means a processor-based, NFC-enabled device, such as portable wireless device 201, (iii) "WSU" means weight sensor unit (Figs 3-6), and (iv) "cloud based software" means specially configured (e.g. server-executed) software running on the central control computer ("CCC") or server 116 (see Fig. 1). To the extent it is used herein, "iBin" means a weight sensor unit 122a (Figs 3-6).

**Figure 1** is a schematic diagram illustrating a distributed stock dispensing and tracking system in which devices and methods according to embodiments of the invention can be used. A manufacturing site or factory 102 may include operational areas 104a to 104f, in which manufacturing and/or repair operations, for example, may performed, requiring, periodically, supply of stock items (not shown). In each operational area 104a to 104f may be one or two respective dispensing stations 106a to 106k. For example, users in operational area 104a may obtain stock items from dispensing stations 106a and 106b, although they may where necessary obtain such items from and of dispensing stations 106a to 106k. In this disclosure, "dispensing" and "dispensing" are used interchangeably, and "dispensing unit" and "dispensing unit" are used interchangeably. For example, using the latter, an operative (user) may replenish his supplies/stock items for manufacturing/maintenance activity, and the overall system dispenses such supplies/stock items.

A respective gateway 108a to 108f may be provided in each operational area 104a to 104f; alternatively, one of the gateways 108a to 108f may serve multiple or all areas operational area 104a to 104f. In use, dispensing devices (not shown) at the dispensing stations 106a to 106k communicate wirelessly with a respective, or with one or more, gateways 108a to 108f, as will be described further below. In this disclosure, "wireless access point" and "gateway" are used interchangeably, and such devices are, in embodiments, to be understood as devices configured to receive signals wirelessly from, and in embodiments transmit signals wirelessly to, first devices (e.g. weight sensor unit as discussed below), and to forward the content of such wireless signals (e.g. as further signals or messages transmitted over a wired or wireless network) to a second device, such as a server, control computer, further gateway, router, etc.

In an embodiment, each gateway 108a to 108f is coupled to router/further gateway 110 and/or local servers 112 in server room 114, e.g., over LAN (not shown). In turn, the router/gateway 110 and/or local servers 112 may communicate with a central computer (central server) 116 via a WAN, e.g., the internet 118. In this disclosure, "central computer", "central control computer", "CCC" and "central server" are used interchangeably to mean the central computer 116 of Fig. 1.

In embodiments, alternatively or additionally one or more of the gateways 108a to 108f comprises a cellular interface (not shown) including or coupled to a cellular antenna (not shown); and, in this manner, one or more of the gateways 108a to 108f may transmit data in signals or messages to central computer (central server) 116 via a cellular network (not shown).

**Figure 2** shows a dispensing station 106a according to an embodiment. In an embodiment, arranged on separate shelves are one or more dispensing units 120a to 120s. In the case of dispensing unit 120a, this comprises a weight sensor unit 122a, and the dispensing unit 120a may further comprise a container, such as bin 124a, the bin 124a being supported, in use, on the weight sensor unit 122a, such as through cooperating (e.g., planar or part-planar) surfaces. As will be appreciated, in a similar manner, each of the other dispensing units 120b to 120s may include a respective weight sensor unit (not labelled), and optionally a respective bin (not labelled). In embodiments involving the use/dispensing of stock items, the bins 124a-124s etc. are configured to receive and/or support stock items (not shown). The bins 124a-124s are suitably made of plastics material. The weight sensor units 122a-122s may be referred to collectively herein as weight sensor units 122. The bins 124a-124s may be referred to collectively herein as bins 124.

As discussed in further detail below, in embodiments, an electronic device (portable wireless device) 201 may interact/communicate wirelessly with any weight sensor units (e.g., weight sensor unit 122a), such as via respective short-range communication interfaces, e.g., NFC interfaces. As used herein, "short-range" means a transmission range (range of reception) lying in the range 0-1 0cm.

In embodiments, the dispensing station 106a may be provided with wheels or casters (not shown), so as to be movable, in an untethered fashion, to anywhere throughout the manufacturing site or factory 102.

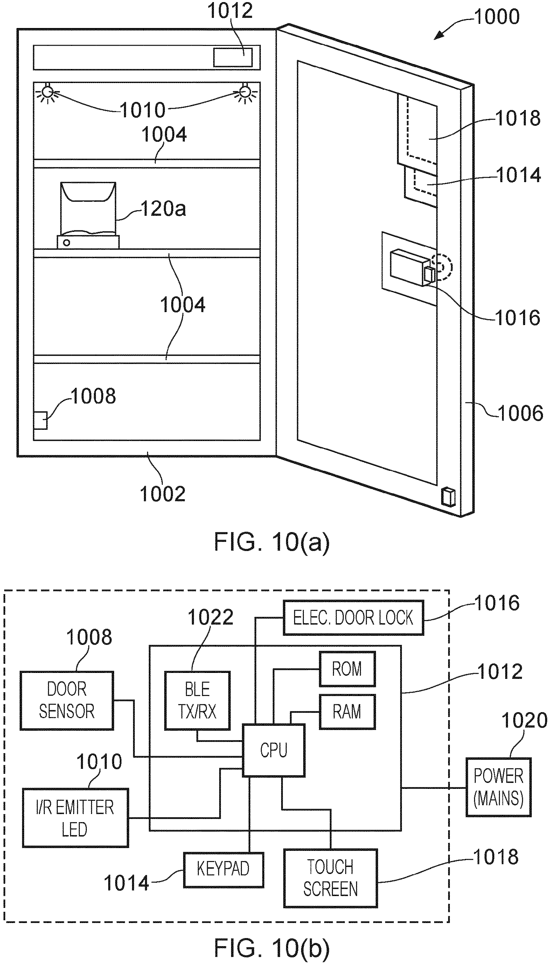

In an embodiment, a dispensing enclosure of Figs 10(a) to 10(i) (see below) may be used in place of the dispensing station 106a.

**Figure 3(a)** is a block diagram of the internal electronics of the weight sensor unit 122a, in an embodiment (all other weight sensor units may be identical or similarly configured). In this embodiment, the weight sensor unit 122a includes a microprocessor 302 which handles all operations of the weight sensor unit 122a. In an embodiment, coupled to the microprocessor 302 is a weight sensor 304 which is physically disposed within a housing (not shown) of the weight sensor unit 122a so as to support the weight of a respective bin 124a. In an embodiment, the weight sensor 304 is a strain gauge type load cell. Accordingly, the weight sensor 304 is configured to provide one or more, e.g., periodic, weight sensor readings indicative of the weight of the bin 124a, e.g., by being polled by the microprocessor 302. A drop in sensed weight corresponds to a stock item being removed from the bin 124a, while an increase in sensed weight corresponds to a stock item being added to the bin 124a. By comparing with unit weights for stock items within that bin 124a, the number of stock items removed or added can be determined (e.g., by the microprocessor 302) based upon the weight sensor readings received. More suitably, in embodiments, such weight sensor readings are transmitted to and received at a remote computer such as central computer 116, at which determinations of a number of items currently present in a bin 124a and/or a number of items removed from or inserted into the bin 124a may be made.

In embodiments, the weight sensor unit 122a includes one or memory devices, such as ROM 306, in which programs for execution by the processor are stored, and the weight sensor unit 122a may include RAM 306 for execution of the programs.

In embodiments, the weight sensor unit 122a includes a transmitter device (which is suitably a transceiver), for communication unidirectionally or bidirectionally with a respective gateway 108a (see Fig. 1). That is, in embodiments, the transmission device is configured to transmit wireless signals with a signal power sufficient to reach a wireless gateway (or a wireless access point). As used herein, in embodiments, the transmission device is an "intermediate range" transmission device, whereas a cellular interface is considered a "long-range" transmission device. Thus, as used herein, "long-range" means 1 to 10 km or 1 to 50 km.

In embodiments, the transmission device is configured to transmit wireless signals with a signal power providing a range of signal reception lying in the range of (i) 1 to 500m, (ii) 50 to 500m, (iii) 50 to 400m or (iv) 100 to 400m. Thus, as used herein, "intermediate range" means a transmission range lying within the ranges according to the preceding sentence.

In embodiments, the transmitter device comprises a Bluetooth Low Energy (BLE) interface 308. Wireless signals and/or messages (including weight sensor signals, stock item quantities, commands etc.) may by transmitted by the BLE interface 308 to the gateway 108a, for forwarding to the router/gateway 110 and/or local servers 112 in server room 114, and/or to central computer (central server) 116 (Fig. 1).

In embodiments, the weight sensor unit 122a also includes a (second) transceiver configured for communication with another device (e.g., a user's portable wireless device, such as a smartphone or PDA). In an embodiment, the (second) wireless transceiver is configured to wirelessly interact with devices placed in proximity thereto. For example, the (second) wireless transceiver is a short-range transceiver configured to wirelessly communicate with a respective short-range transceiver of the portable wireless device. Suitably, the transceiver comprises a Near Field Communication (NFC) interface 310. In embodiments, wireless communications (including weight sensor signals, stock item quantities, commands or other data, etc.) may by transmitted by the NFC interface 310 to the portable wireless device (not shown), and/or other wireless signals (including stock item quantities, commands or other data, etc.) may be received therefrom, as will be described in more detail below.

Optionally, the weight sensor unit 122a also includes a bin lid sensor 312, in embodiments where the container (bin) 124a includes a bin lid. The bin lid sensor 312, which alternatively may be disposed within the bin 124a or bin lid, may be configured to provide a signal to the microprocessor 302 indicative of the bin lid transitioning from closed to open. Thus, although illustrated as being part of the weight sensor unit 122a, the bin lid sensor 312 may be part of the bin 124a, as discussed in further detail below. In this respect, as appropriate in embodiments, the bin lid sensor may be an analog device mounted on the bin 124a, and the component labelled 312 may be lid sensor interface 312', such as a thresholding device (e.g., comparator) or an analog-to-digital converter. In any event, in such embodiments, the lid sensor interface 312' is configured to issue or to convey to the microprocessor 302 a lid open signal in the event that a transition of the lid (not shown) from closed to open is detected by the lid sensor and/or a lid close signal in the event that a transition of the lid (not shown) from open to closed is detected by the lid sensor (not shown).

Optionally, the weight sensor unit 122a also includes a temperature sensor (thermometer) 314 configured to provide a signal to the microprocessor 302 indicative of the temperature of the weight sensor unit 122a or the ambient temperature.

Optionally, the weight sensor unit 122a also includes an accelerometer 316 configured to provide a signal to the microprocessor 302 indicative of, for example, whether the weight sensor unit 122a is moving, has moved more than a predetermined amount, and/or of the speed of movement of the weight sensor unit 122a.

Optionally, the weight sensor unit 122a also includes an optical sensor 320. The optical sensor may be an infrared (IR) photodetector or an IR photodiode.

In embodiments, one, any subset or (preferably) all components 302 to 320 within the weight sensor unit 122a are powered, in use, by battery 318. This may be a rechargeable battery, such as a Lithium-ion battery.

Figure 3(b) is a block diagram of the internal electronics of one of the weight sensor units 122a of Fig. 1, in an alternative embodiment. This is the same as the embodiment of Fig. 3(a), except as follows. The weight sensor 304 may comprise an analog strain gauge connected to the processor 302 via an ADC 336, which digitises weight signals from the strain gauge and provides digital weight readings. BLE transceiver 308 may be coupled to aerial 330, for transmitting signals. The weight sensor units 122a may include a visual indicator element indicating status, such as LED 332.Finaly, the weight sensor units 122a may be provided with a hardware interrupt button 334, for use for configuration purposes.

**Figure 3(c)** is a schematic block diagram of the internal electronics of the (external) gateway 108a to 108f of Fig. 1, in an embodiment. A processor 342 is coupled for operation in conjunction with memory devices, such as non-volatile memory 344 and RAM 346. All components of the external gateway 108a may be powered by poser supply unit 308.

The processor 342 may be coupled for operation with a first wireless interface, such as BLE interface 340. The processor 342 may be coupled for operation with a second wireless interface, such as cellular interface 344. The processor 342 may be coupled for operation with a fixed interface, such as LAN/WAN interface 342. The latter interfaces may allow communication with CCC 116 via network 118.

An advantage is that the weight sensor unit is an autonomous unit, and can be independently deployed to a wide range of locations. In addition, no connecting up of cabling is necessary, greatly simplifying and expediting the process of deploying a weight sensor unit. For a large number of weight sensor units to be deployed across a site or at multiple sites, the technical installation time and effort is considerably reduced.

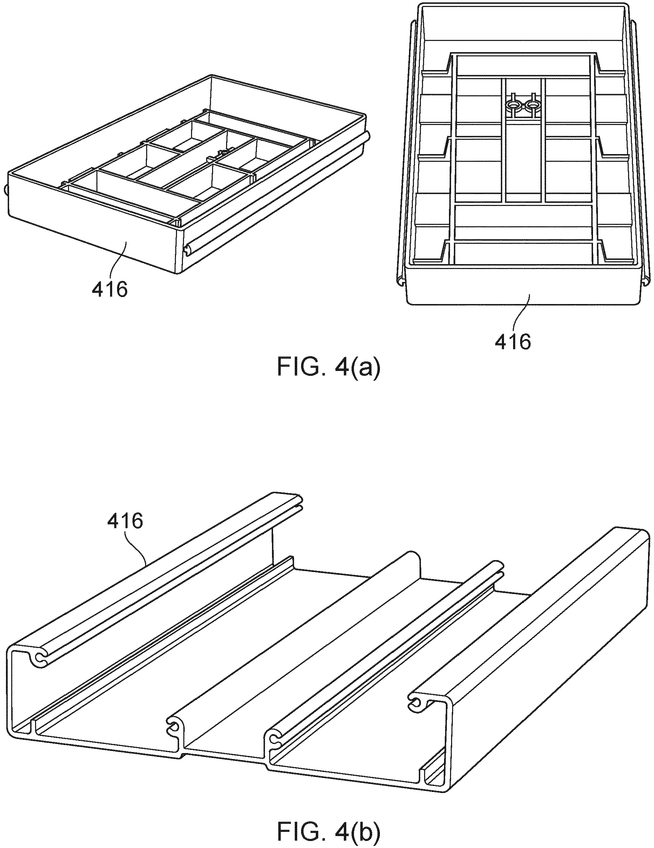

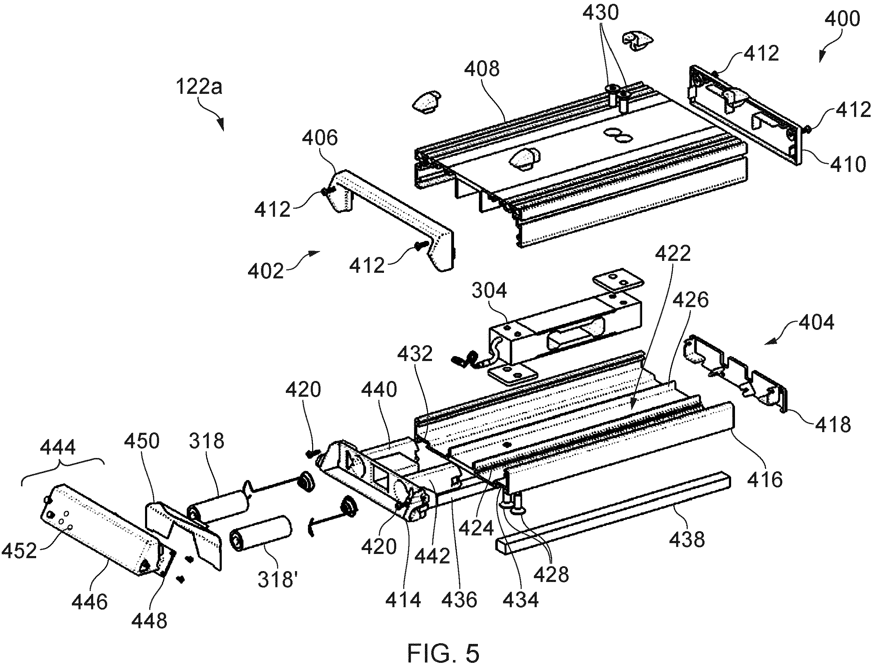

**Figures 4(a) to 4(h)** show various views of a dispensing unit 120a and a weight sensor unit 122a according to embodiments. Further, Fig. 5 is an exploded perspective view of the weight sensor unit 122a of Fig. 2. (Any subset of the dispensing units 120b to 120s, the weight sensor units 122b to 122s, and the bins 124b to 124s may be identical.)

Referring initially to Fig. 5, the weight sensor unit 122a includes a housing generally designated 400. In this embodiment, the housing 400 includes an upper housing section 402 and a lower housing section 404. The upper housing section 402 may include an upper front piece 406, an upper housing part 408 and/or an upper end piece 410, with the foregoing components 406-410 assembled by means of screws 412. The lower housing section 404 may include a lower front piece 414, a lower housing part 416 and/or a lower end piece 418, with the foregoing components 414-418 assembled by means of screws 420. Preferably, upper housing part 408 and/or lower housing part 416 is a plastic extrusion, and/or the other components of upper housing section 402 and lower housing section 404 are plastics items, formed from moulds.

In this embodiment, the lower housing part 416 includes a base channel 422, e.g., extending centrally and/or longitudinally and/or defined by base ribs 424 and 426. The base channel 422 is shaped and sized to receive the weight sensor 304 (Fig. 3). The weight sensor 304 may be attached to the lower housing part 416 by means of screws 428. In addition, the weight sensor 304 may be attached to the upper housing part 408 by means of screws 430.

In this embodiment, the lower housing part 416 includes a one or more (here, two) groove portions 432 and 434, which may extend longitudinally and/or parallel to the base channel 422, and/or be disposed at a transverse position between the base channel 422 and a respective distal edge of the lower housing part 416. The or each groove portion 432 and 434 may be shaped and sized to receive a respective anti-vibration member 436, 438, which may be a foam or foam rubber member. The or each anti-vibration member 436, 438 may be an elongated foot member and/or may have a length of 90-100% of the length of the respective groove portion 432, 434.

In an embodiment, the lower front piece 414 includes one or more (here, two) chambers 440 and 442, which may extend longitudinally and/or parallel to the base channel 422. Each chamber 440, 442 is shaped and sized to receive a respective battery 318 (Fig. 3); and the battery(ies) 318, 318' powers one, a subset or all of the components of the weight sensor unit 122a.

In an embodiment, engaging the lower housing section 404 is a faceplate assembly 444. In this embodiment, the faceplate assembly 444 comprises, e.g., in sequence in the longitudinal direction, a faceplate 446, a PCB 448 and an endplate 450. In embodiments, the circuit of Fig. 3 is incorporated in the PCB 448.

In an embodiment in which the circuit of Fig. 3 includes an optical sensor 320, a window 452 and/or an optical channel (not shown) may be provided in the faceplate 446 in order to convey optical energy to the optical sensor 320. Alternatively, the optical energy receiving portion of the optical sensor 320 may be exposed at or protrude from the window 452.

In embodiments, the bins 124 and weight sensor units 122 may include cooperating elements whereby each weight sensor unit 122 engages a respective bin 124 in a supporting configuration and/or each weight sensor unit 122 is detachably physically coupled to a respective bin 124.

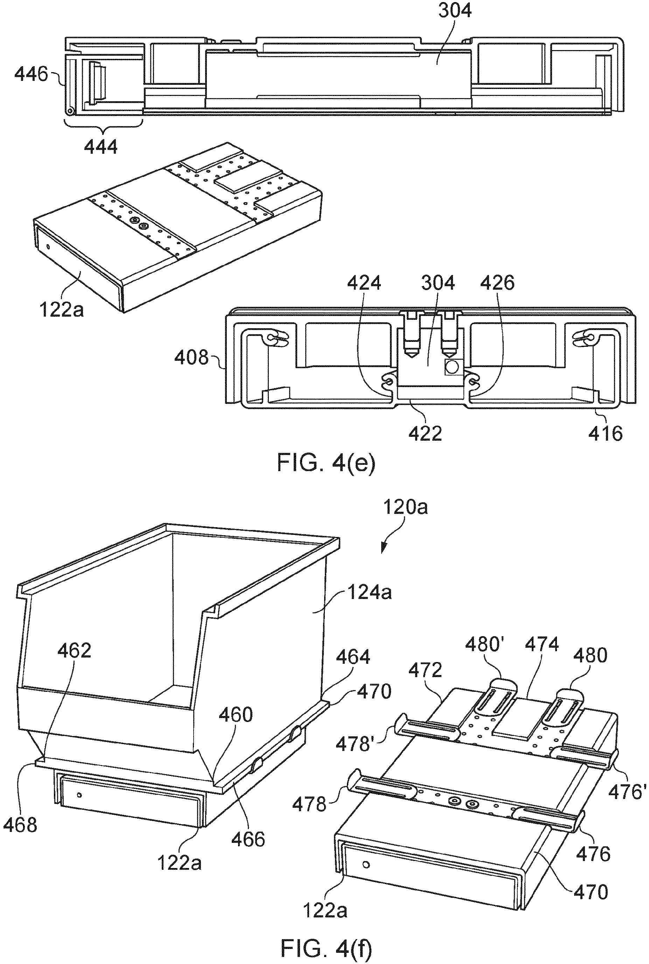

In embodiments, the bins 124 have on one or more lower edges thereof an elongate flange part. For example, in an embodiment illustrated in **Fig. 4(f)****,** at right lower lateral edge 460, left lower lateral edge 462 and/or rear lower lateral edge 464 are elongate flange parts 466, 468 and 470, respectively. In embodiments, one, some or all of the elongate flange parts 466, 468 and 470 are integral with the rest of the bin 124a. In embodiments, one, some or all of the elongate flange parts 466, 468 and 470 extend partly or fully along the length of a respective edge 460, 462 and 464.

In embodiments, weight sensor units 122 have, protruding transversely from one or more upper edges thereof, one or more retention members. In the embodiment of Fig. 4(f), at right upper lateral edge 470, left upper lateral edge 472 and/or rear upper lateral edge 474 of weight sensor unit 122a are disposed at least one respective retention member 476, 478, 480. In this embodiment, at right upper lateral edge 470, left upper lateral edge 472 and/or rear upper lateral edge 474 of weight sensor unit 122a are disposed respective pairs of retention members: 476, 476; 478, 478' and 480, 480'. In embodiments, one, some or all of the retention members 476, 476; 478, 478' and 480, 480' have an "L" shape longitudinal cross section. In embodiments, the long part of the "L" extends parallel to an upper surface of the weight sensor unit 122a and/or a at least a distal end thereof is attached to said surface, e.g., through snap fit or by screwing. In embodiments, the short part of the "L" extends perpendicular to an upper surface of the weight sensor unit 122a and/or extends vertically up from a proximal end of the long part of the "L".

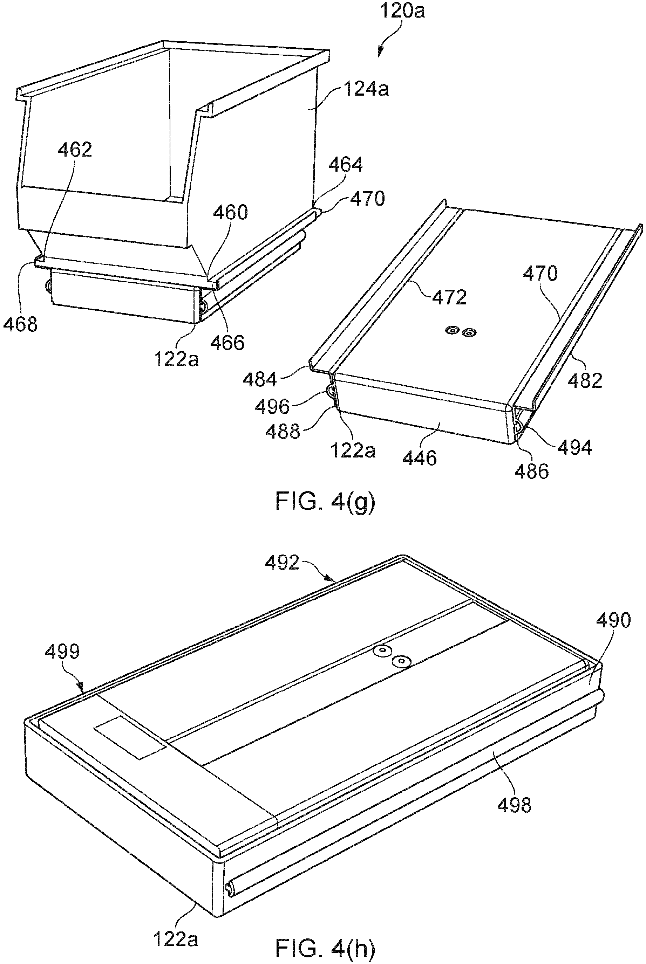

In the embodiment of Fig. 4(g), at right upper lateral edge 470 and left upper lateral edge 472 of weight sensor unit 122a are disposed at least one respective retention member 482, 484. In this embodiment, the or each retention member 482, 484 may extend partly or fully along the length of a respective edge 470, 472. In embodiments, one or both of the retention members 482, 484 have an "L" shape longitudinal cross section. In embodiments, the long part of the "L" extends parallel to an upper surface of the weight sensor unit 122a and/or at least a distal end thereof is attached to the weight sensor unit 122a. In embodiments, the short part of the "L" extends perpendicular to an upper surface of the weight sensor unit 122a and/or extends vertically up from a proximal end of the long part of the "L". In embodiments, the distal end of the long part of the "L" is attached to or integral with a respective mounting piece 486, 488 configured to be attached to a respective side 490, 492 (see Fig. 4(h)) of the weight sensor unit 122a. In an embodiment, each mounting piece 486, 488 includes a mounting channel 494, 496 configured to be mounted on a respective elongate mounting flange 498, 499 on a respective side 490, 492 of the weight sensor unit 122a.

The weight sensor unit 122a according to the features of any one of the preceding eleven paragraphs, and/or as described with reference to any of Figs 5(a) to 5, may be provided independently of the other features, e.g., electronics, of weight sensor unit 122a disclosed herein and/or independently of the use of batteries (i.e., in the latter embodiment, the weight sensor unit 122a may be mains powered).

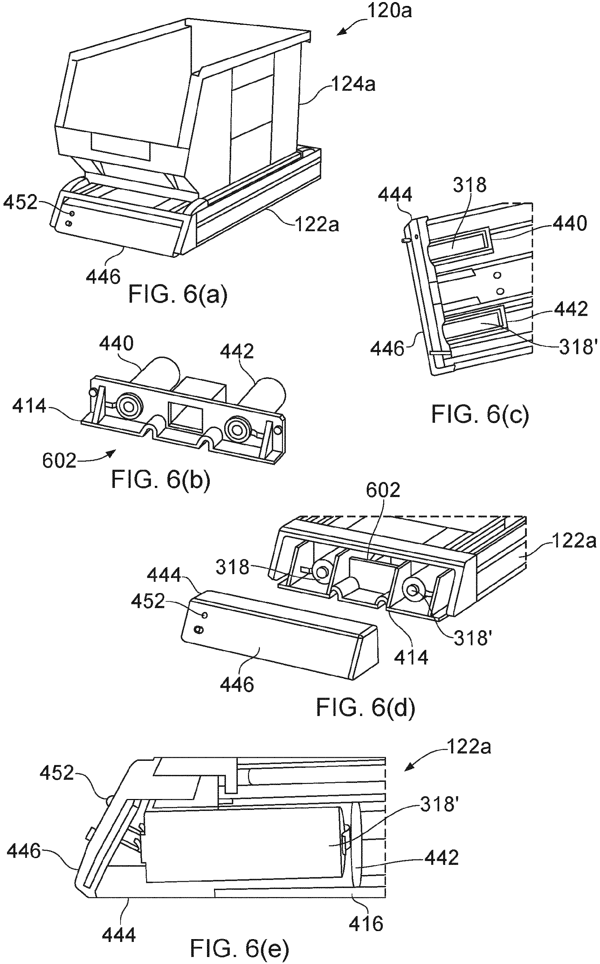

**Figures 6(a) to 6(e)** show various views of a dispensing unit 120a and a weight sensor unit 122a according to embodiments, illustrating a battery compartment generally designated 602 (and including chambers 440, 442) of the weight sensor unit 122a, a cover thereof (formed by face plate assembly 444) and the disposition of batteries 318, 318' within the battery compartment 602.

### Autonomous weight reading reporting.

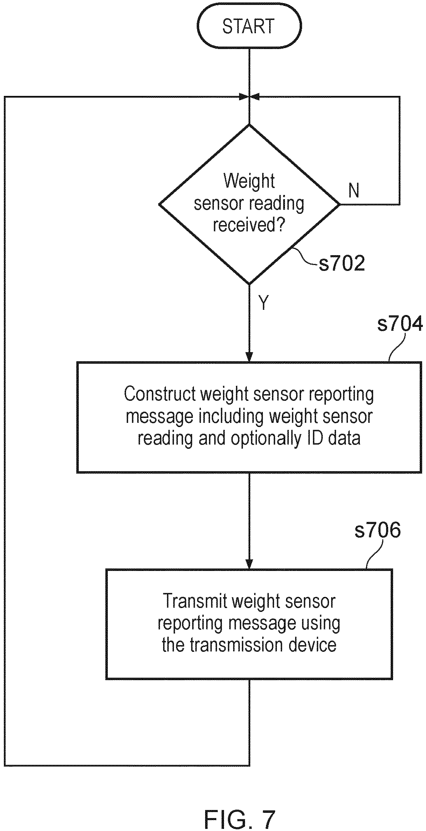

Figure 7 is a flow chart of the operations performed by a processor 302 (Fig. 3) of the or each weight sensor unit 122, in an embodiment. Initially, the processor 302 waits for receipt of a weight sensor reading from the weight sensor 304. The receipt of the weight sensor reading may be in response to polling by the processor 302 and/or triggered by some other ever, as discuss in further detail hereinafter.

If it is determined (block s702) that weight sensor reading has been received, the processor 302 transmits (block s706) the one or more weight sensor readings wirelessly using the transmission device (e.g., BLE interface 308 in Fig 3.).

Optionally, prior to transmitting, the processor 302 receives a weight sensor reading output by the weight sensor 304 and constructs (block s704) a weight sensor reporting message, the weight sensor reporting message including the weight sensor reading, and transmits the weight sensor reporting message using the transmission device 308.

In an embodiment, the weight sensor reporting message also includes identifying data related to the dispensing unit 120a or to the weight sensor unit 122a. In an embodiment, the weight sensor unit 122a has a weight sensor unit ID and/or a weight sensor unit type ID, and the identifying data comprises or additionally includes the weight sensor unit ID and/or the weight sensor unit type ID. In an embodiment, the transmission device 308 has a transmission device ID (e.g., BLE ID) and/or a transmission device type ID, and the identifying data comprises or additionally includes the transmission device ID and/or the transmission device type ID. In an embodiment, the container (bin 124a) has a container ID and/or a container type ID, and the identifying data comprises the container ID and/or the container type ID. In an embodiment, the container ID is unique to the container (bin 124a), the weight sensor unit ID is unique to the weight sensor unit and/or the transmission device ID is unique to the transmission device 308.

In an embodiment, the processor 302 is configured to repeatedly poll the weight sensor for a weight sensor reading with a predetermined periodicity T. In embodiments, (i) T is in the range 1 to 10 minutes, (ii) T is in the range 2 to 5 minutes or (iii) T is 3 minutes.

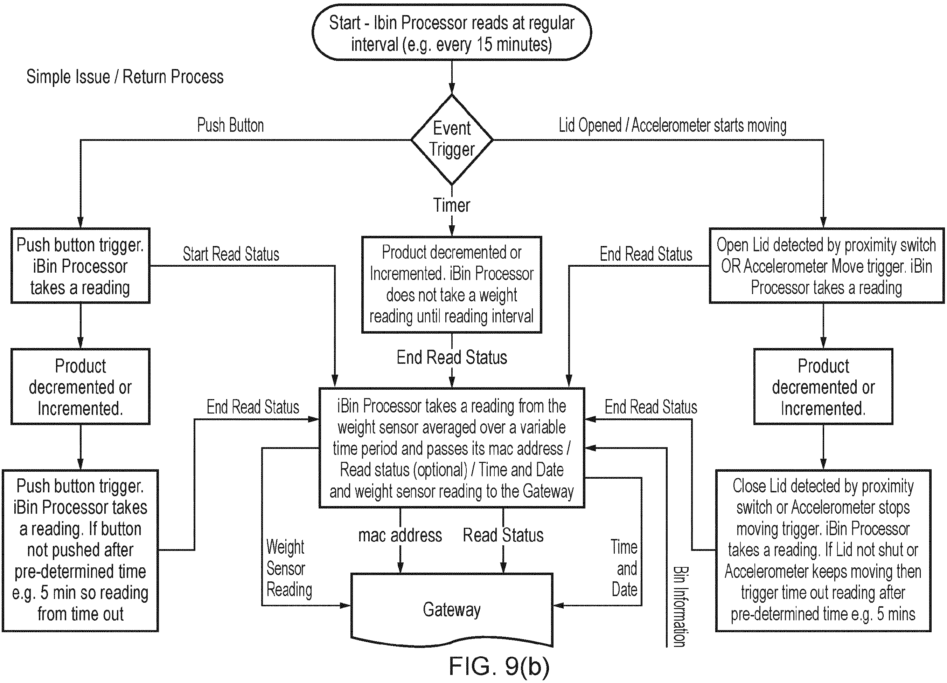

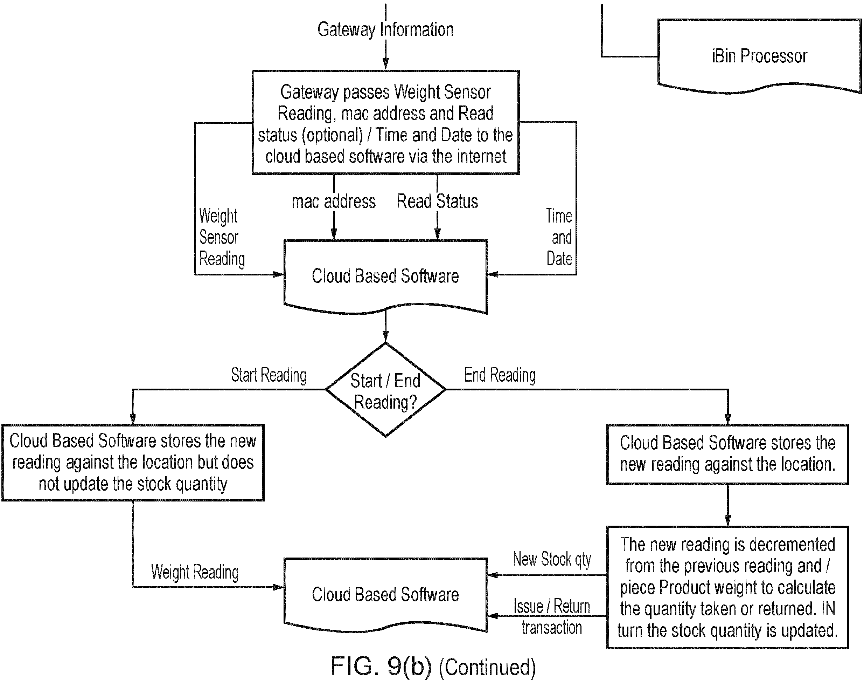

In an embodiment in which the weight sensor unit is used in a stock monitoring system for monitoring the quantity of stock items in a respective dispensing unit 120a and or the number of stock items removed from or inserted/returned into a respective dispensing unit 120a, processing may proceed according to the central portion of Fig. 9(b), i.e., after the "event trigger" is received.

Due to being battery powered, the weight sensor unit 122a is able to be placed anywhere within the range of the (Bluetooth) gateway, greatly enhancing the flexibility of real time inventory control. An individual weight sensor unit 122a can be moved from manufacturing cell to manufacturing cell and continue to work seamlessly within, e.g., up to 400 metres with Bluetooth 5.0 in line of sight of the nearest (BLE) gateway 108a. In addition, racks of weight sensor units 122 can be on wheels and moved around factories and MRO (Maintenance Repair and Overhaul) facilities, so inventory can be moved to point-of-use easily.

### Closable dispensing units with trigger.

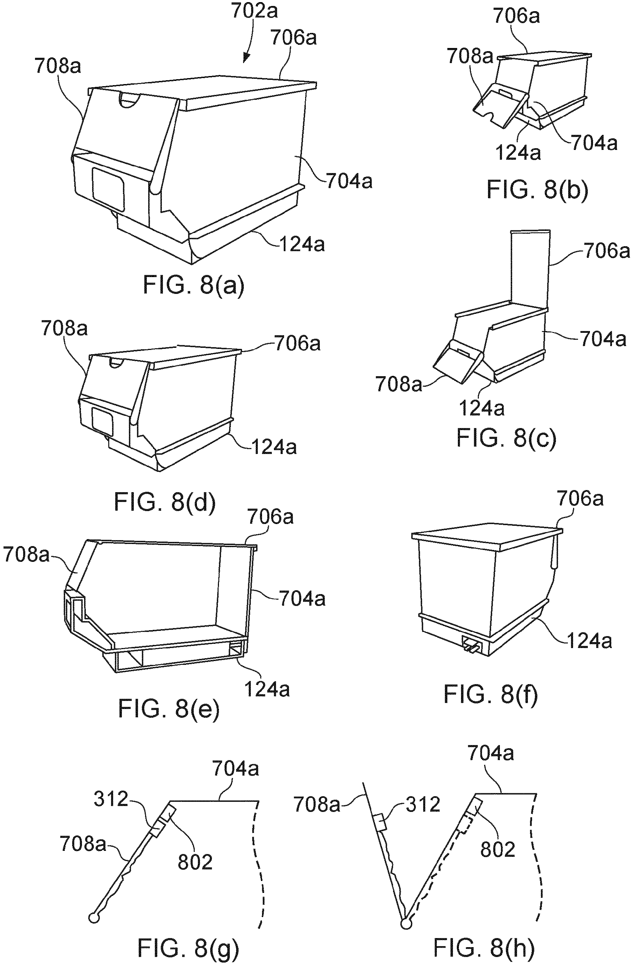

**Figures 8(a) to 8(h)** show various views of a dispensing unit 702a and a weight sensor unit 122a according to different embodiments. These are the same as the embodiments of Figs 1-6, except as described otherwise hereinafter. In the embodiments of Figs 8(a) to 8(h), the dispensing unit 702 has a different form of container (bin 704a) including one or more bin lids. In an embodiment, one of the bin lids is in the form of a top flap 706a. Preferably, the top flap 706a clips into mounting points at the rear of the bin 704a. In this way, the bin lid 706a may be rotatably about a transverse axis through points at the upper rear edge of the bin 704a.

In an embodiment, one of the bin lids is in the form of a front door 708a, for example that clips into mounting points at the front of the bin 704a. In an embodiment, the bin lid 708a is rotatable about a transverse axis through points at the front of the bin 704a, e.g., points disposed part way up the height of the bin 704a. In an embodiment, the bin lid 708a is rotatable from a closed position (in which the bin 704a is closed and items therein are inaccessible) to an open position (in which the bin 704a is open and items therein are accessible).

Referring to Fig. 8(g) (bin lid 708a closed) and Fig. 8(h) (bin lid 708a open), in an embodiment, the bin lid sensor 312 comprises an accelerometer, or a reed switch whereby in the latter case an actuating member of the reed switch moves into an out of engagement with contacts as bin lid 708a moves from closed to open, or vice versa. In an embodiment (Figs 8(g) and 8(h)), a magnet 802 is mounted on one of the bins 704a and the bin lid 708a and the bin lid sensor 312 comprises a hall effect sensor mounted on the other of the bin 704a and the bin lid 708a.

In embodiments, upon opening or closing of the bin lid 708a, the bin lid sensor 312 within the container (bin 704a), bin lids 706a, 708a or weight sensor unit 122a senses the change and issues (to the processor 302 of the weight sensor unit 122a), a bin lid open signal or a bin lid closed signal, respectively.

The dispensing unit 702a according to the features of any one of the preceding four paragraphs, and/or as described with reference to any of Figs 8(a) to 8(h), may be provided independently of all the other features, e.g., electronics, of weight sensor unit 122a disclosed herein and/or independently of the use of batteries. In the latter embodiment, the weight sensor unit 122a may be mains powered, and be provided with a socket (e.g., CAN socket for power and communications) at the rear of the weight sensor unit 122a.

As noted above, in an embodiment, the bin 704a is configured to receive or support stock items (not shown) and includes a lid 708a. In an embodiment, a lid sensor 312 on the container or lid is configured to issue at least a lid open signal in the event that a transition of the lid from closed to open is detected by the lid sensor.

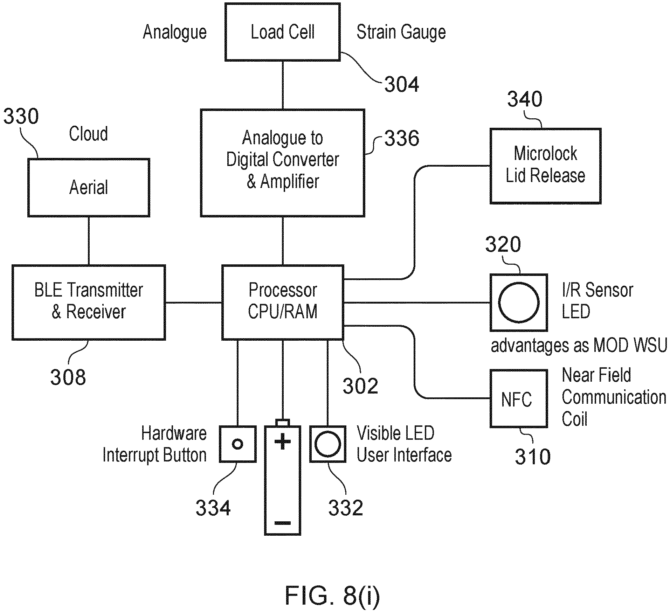

**Figure 8(i)** is a block diagram of the internal electronics of a weight sensor unit 122a for use with the lidded bin of Figs **8(a) to 8(h)****,** in an embodiment. This is essentially the same as the WSU 122a of Figs 3(a) and 3(b), except as follows. The retention of the lid 708a in closed position may be via a microlock 340. A drive signal to the microlock 340 releases the bolt (armature) and the lid rises under spring bias (not shown). Pushing don on the lid re-engages the lock. A lid closure sensor in this case may be implemented by the microlock 340 - its (last) drive signal status being indicative of lid open/closed.

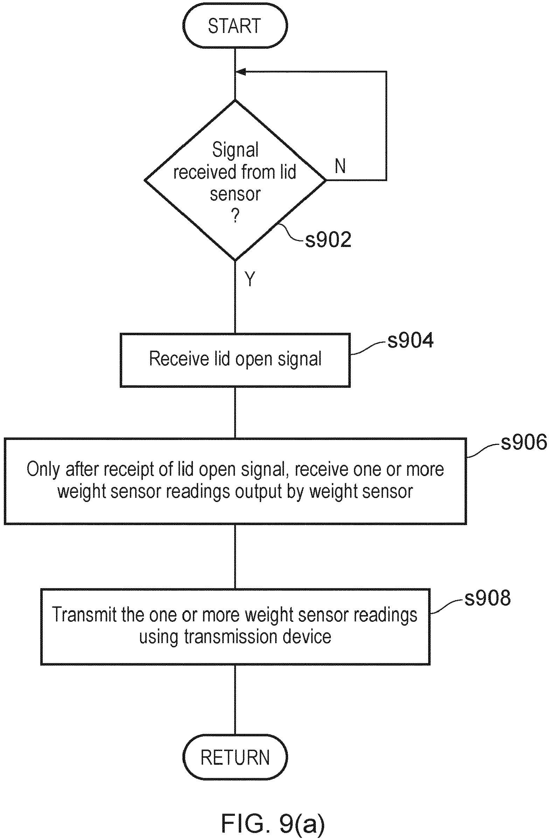

Figure 9(a) is a flow chart of the operations performed by a processor 302 (Fig. 3) of the or each weight sensor unit 122, in an embodiment. First, the processor waits (block s902) for an input from the lid sensor 312 (i.e., a lid open signal). If such signal has been issued by the lid sensor 312, the lid open signal is received at block s904. Then, only after receipt of the lid open signal, one or more weight sensor readings output by the weight sensor 304 are received (block s906). Then, the one or more weight sensor readings are transmitted (block s908) using the transmission device (e.g., BLE interface 308 in Fig. 3).

In an embodiment, the lid sensor 312 is further configured to issue a lid close signal in the event that a transition of the lid 708a from open to closed is detected by the lid sensor 312. In this embodiment, the processor 302 is further configured to: only after receipt of the lid close signal, receive one or more weight sensor readings output by the weight sensor 304, and transmit the one or more weight sensor readings using the transmission device 308. In an embodiment, the processor 302 is configured to transmit the one or more weight sensor readings using the transmission device 308 only after receipt (i) of the lid open signal and (ii) the lid close signal within a predetermined timeout period after the lid open signal.

In an embodiment, the transmission device 308 is configured to be operated in one of at least a first state in which the transmission device consumes power P1, and in a second state, in which the transmission device 308 consumes power P2, wherein P2 is greater than P1. In an embodiment, the processor 302 is configured to switch the transmission device 308 from the first state to the second state only after only after receipt (i) of the lid open signal and/or (ii) the lid close signal within a predetermined timeout period after the lid open signal. In an embodiment, in the first state the transmission device 308 is in deactivated mode, and in the second state the transmission device 308 is in activated mode whereby it is able to transmit the wireless signals. In an embodiment, (i) P1 is 2 to 50 times P2, or P1 is 5 to 15 times P2 or P1 is 10 times P2 and/or (ii) P3 is 2 to 50 times P4, or P3 is 5 to 15 times P4 or P1 is 10 times P2.

In an embodiment, after the lid close signal and until the next lid open signal the processor 302 is configured to repeatedly poll the weight sensor 304 for a weight sensor reading with a predetermined periodicity T. In embodiments, (i) T is in the range 1 to 10 minutes, (ii) T is in the range 2 to 5 minutes or (iii) T is 3 minutes.

In an embodiment, the processor 302 is configured to transmit the wireless signals using the transmission device 308 at a given time at a settable signal strength S, corresponding to a range R of signal reception. In an embodiment, (i) the signal strength S corresponds to a range R of signal reception lying in the range of (i) 1 to 500m, (ii) 50 to 500m, (iii) 50 to 400m or (iv) 100 to 400m.

In an embodiment, after the lid open signal and until the next lid close signal the processor 302 is configured to repeatedly poll the weight sensor to obtain a weight sensor reading, and to average the weight sensor reading obtained over a predetermined period lying within or contemporaneous with the period between the lid open signal and until the next lid close signal. In an embodiment, the processor 302 is configured to: poll the weight sensor 304 to obtain a weight sensor reading in response to receipt of the lid open signal; and/or poll the weight sensor to obtain a weight sensor reading in response to receipt of the lid close signal; and/or average weight sensor readings in a period commencing at a time point a first predetermined delay period after the lid open signal and/or ending at the next lid close signal.

In an embodiment in which the weight sensor unit is used in a stock monitoring system for monitoring the quantity of stock items in a respective dispensing unit 120a and or the number of stock items removed from or inserted/returned into a respective dispensing unit 120a, processing may proceed according to the flowchart of Fig. 9(b).

In an embodiment, a dispensing arrangement comprises a housing (not shown), wherein a plurality of compartments are configured or disposed within the housing. In this embodiment, each compartment is configured as a dispensing unit as described above with reference to any of Figs 3 and 5 to 9(a).

In an embodiment, a dispensing enclosure comprises a housing, a door mounted on the housing, whereby the door is openable and closable by a user, and one or more shelves mounted internally within the housing. In an embodiment, one or more dispensing units as described above with reference to any of Figs 3 and 5 to 9(a) is disposed on one or more of the shelves.

For the dispensing arrangement or the dispensing enclosure of the preceding two paragraphs, in embodiments, for each dispensing unit, the processor thereof the corresponding dispensing unit is configured to (i) obtain the weight sensor readings and/or (ii) transmit the one or more weight sensor readings using the transmission device, independently of the processor of the or each other dispensing unit. For the dispensing arrangement or the dispensing enclosure of the preceding two paragraphs, in embodiments, (i) the weight sensor readings are obtained and/or (ii) the one or more weight sensor readings are transmitted using the transmission device, only by the respective processor of those dispensing units in which the lid open signal and/or the next lid close signal is received.

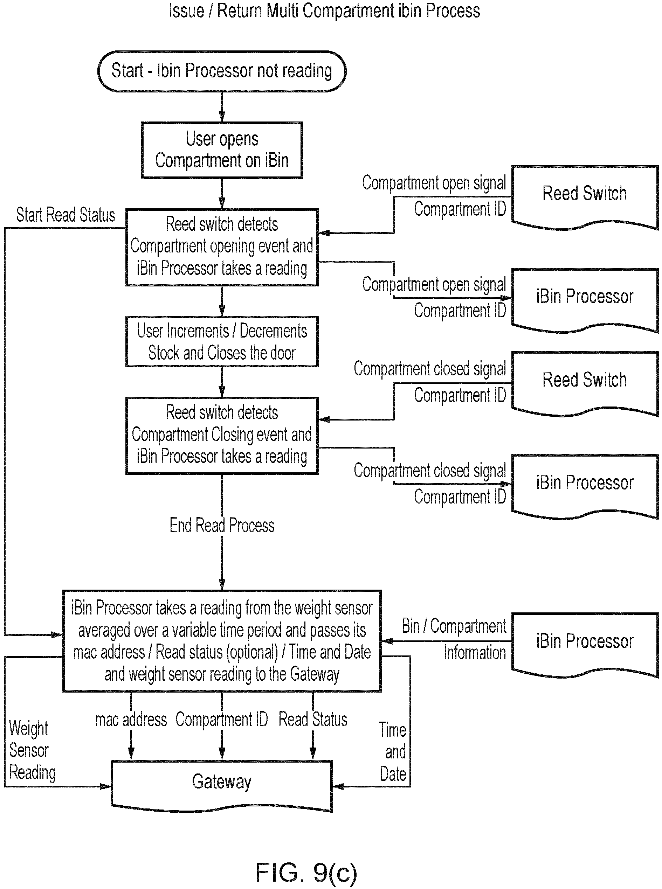

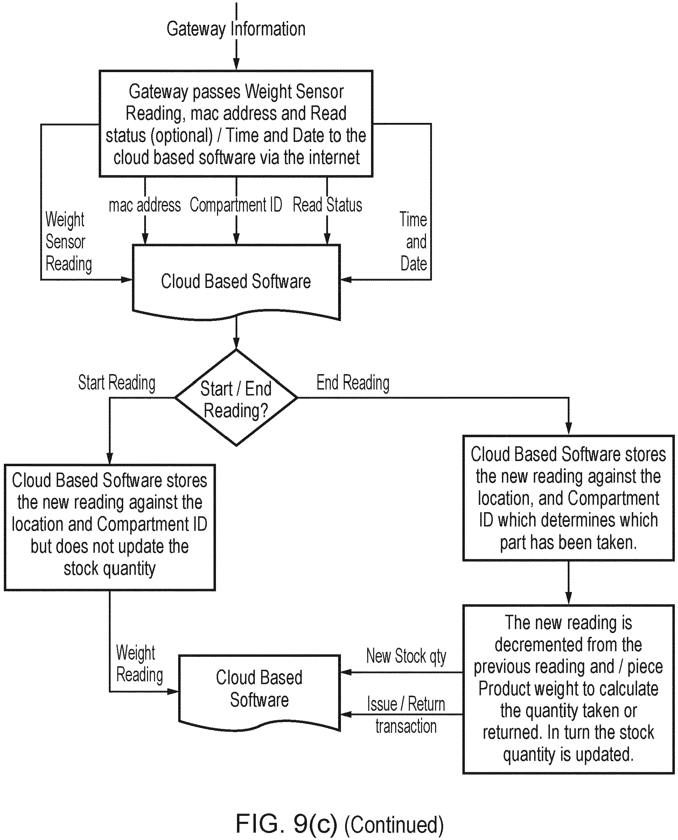

In an embodiment in which the weight sensor unit is used in a stock monitoring system for monitoring the quantity of stock items in a respective dispensing unit 120a and or the number of stock items removed from or inserted/returned into a respective dispensing unit 120a, processing may proceed according to the flowchart of Fig. 9(c). To the extent appropriate, the operations of Fig. 9(a) and 9(b) may be combined with one, some or all of the operations in Fig. 9(c).

Figure 10(a) is a front view of a dispensing enclosure (cabinet 1000) according to an embodiment, and Fig. 10(b) is a schematic block diagram of the internal electronics of the cabinet 1000. As used herein, in embodiments the cabinet 1000 is also referred to as a vending solution.

In an embodiment, the cabinet 1000 comprises a housing 1002, one or more shelves 1004 mounted internally within the housing 1002, one or more dispensing units 120a (only one is shown, for illustration) as described above with reference to any of Figs 3 and 5 to 9(a) disposed on one or more of the shelves 1004. In an embodiment, the cabinet 1000 comprises a door 1006 mounted on the housing 1002, whereby the door is openable and closable by a user, and a door sensor 1008 configured to output a door open signal in the event of the door 1006 transitioning from closed to open and a door close signal in the event of the door 1006 transitioning from open to closed. The door sensor 1008 may take any of the forms of the bin lid sensor 312 described above in relation to Fig. 8. In an embodiment, the door 1006 is a glazed door incorporating a transparent pane. In an embodiment, the door 1006 is a solid and/or non-transparent door.

In an embodiment, the cabinet 1000 comprises an optical transmitter 1010 configured to transmit optical signals. In an embodiment, the cabinet 1000 comprises a controller 1012, the controller being connected to the door sensor 1008 and to the optical transmitter 1010. In an embodiment, (i) the optical transmitter 1010 is an infrared (IR) light emitter or (ii) an IR LED.

In an embodiment, the controller 1012 comprises a wireless gateway. In an embodiment, the controller 1012 includes or is connected to a first wireless receiver or first wireless transceiver 1022. In an embodiment, the first wireless receiver or first wireless transceiver 1022 is a Bluetooth Low Energy (BLE) receiver or transceiver, respectively, and the wireless signals are BLE signals.

In an embodiment, the controller includes or is connected to a cellular transceiver or wired network transceiver (not shown).

In an embodiment, the cabinet 1000 further comprises a keypad 1014 for controlling user access, a door lock 1016 and a touchscreen 1018 for user information and/or alternative access control. The cabinet 1000 may be powered by a mains power supply, indicated at 1020. In an embodiment, the controller has a secondary power source, such as a battery or UPS (not shown).

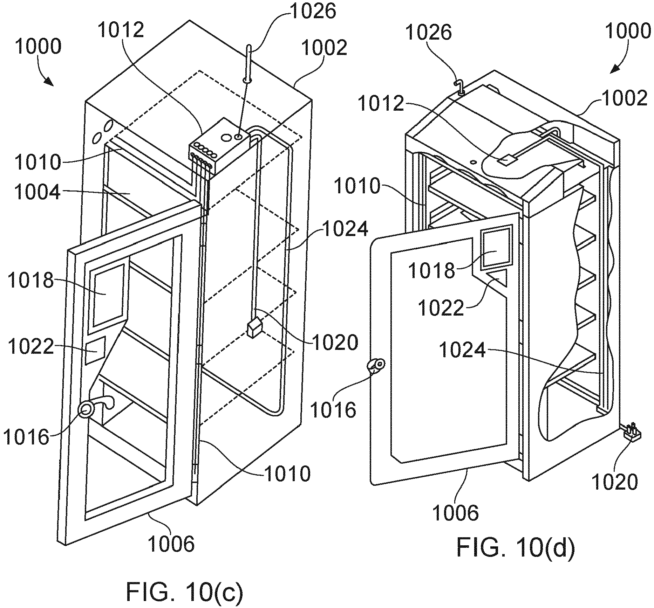

Referring to Fig. 10(c), in embodiment, a card reader 1022 is provided for controlling user access, the card reader 1022 being configured to read a user card presented by the user, and extract therefrom a user ID. Coupled to the controller 1012 may be a leaky wave antenna 1024, for receiving wireless signals from devices within the cabinet. The controller 1012 may communicate wirelessly with a network using a cellular interface (not shown), using cellular antenna 1026. In an embodiment, the secondary power source is a battery.

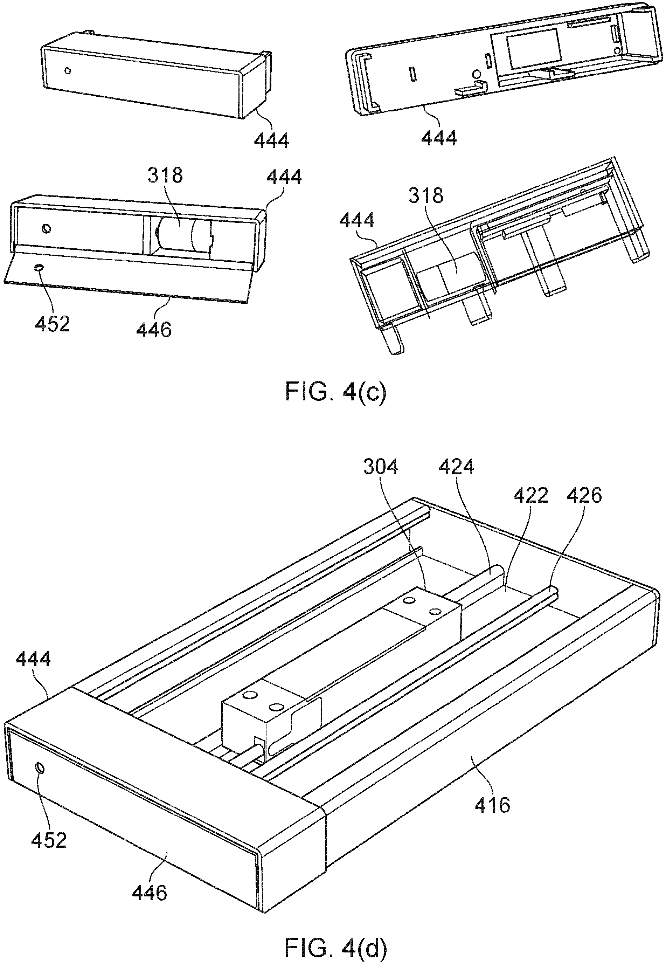

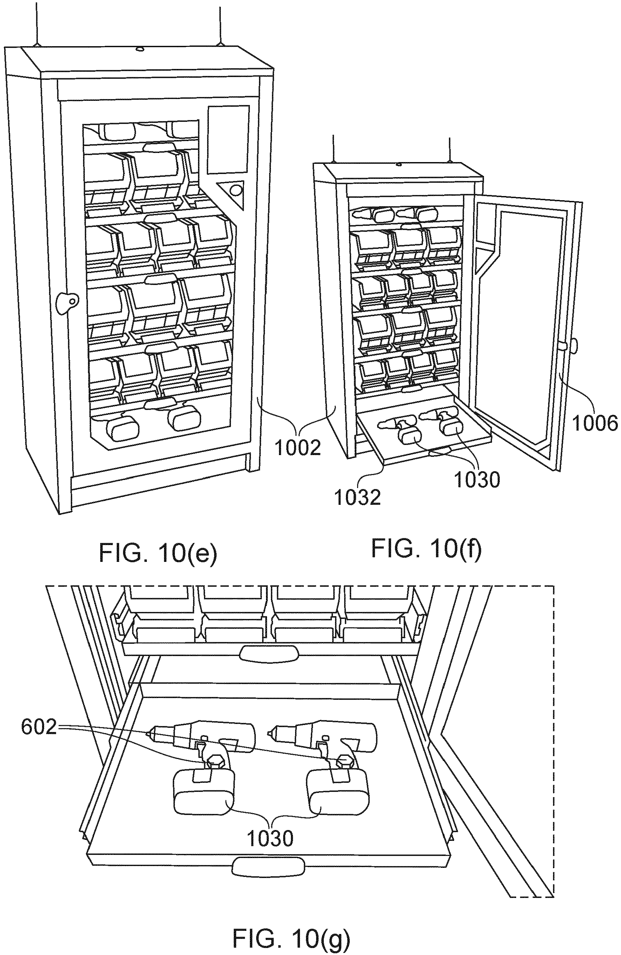

**Figures 10(e) to 10(g)** are perspective views of the cabinet 1000' of Fig. 10(d) in various states (e.g., open/closed). As seen in Figs 10(e) and 10(f), assets (e.g., power tools) 1030 may be accessed by a user via pull-out tray 1032 (and thereafter removed). As seen in Fig. 10(g), each asset 1030 may have attached thereto (e.g., by adhesive film) a respective asset tag 602, discussed below with respect to Fig 4. Each asset tag 602 may have a globally unique tag ID, e.g., provided by an ID of an interface thereof, e.g., a Bluetooth Low Energy (BLE) ID.

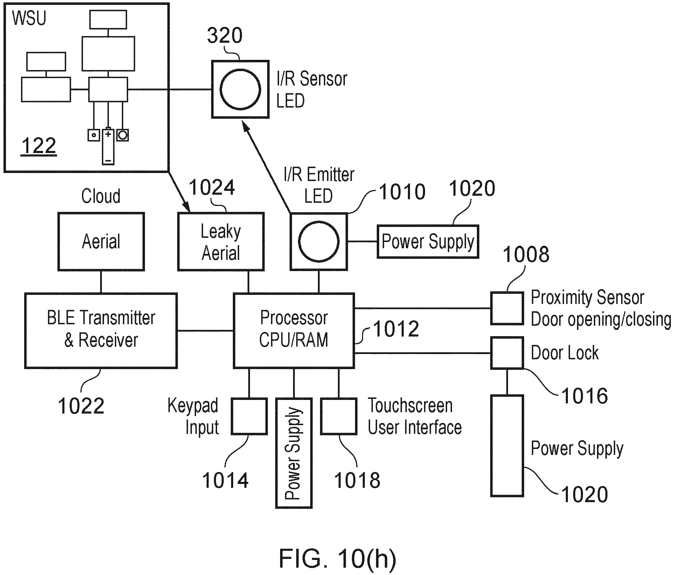

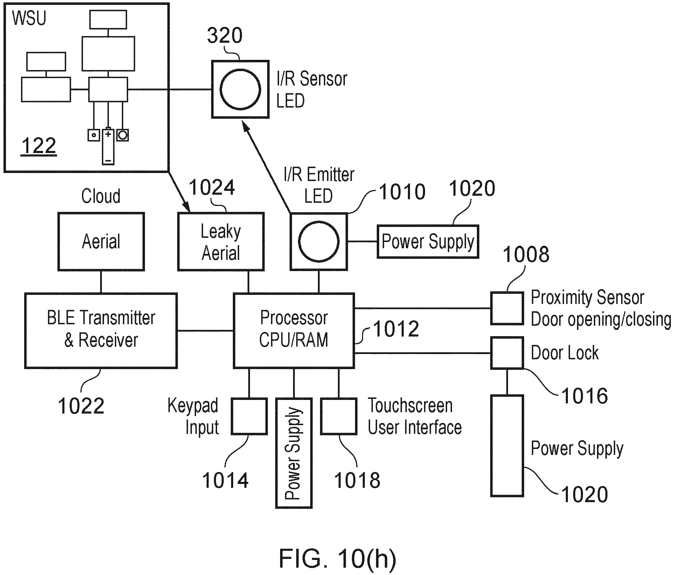

**Figure 10(h)** is a schematic block diagram of the internal electronics of the cabinet 1000 of anyof Figs 10(c) to 10(g), in another embodiment. This is essentially the same as that of Fig. 10(b), and like references indicate like elements. In this embodiment, the cabinet controller 1012 comprises or is connected to a further wireless interface, for communication with asset tags 602. This further wireless interface may comprise a ultra-wideband (UWB) interface 1030, as discussed further below.

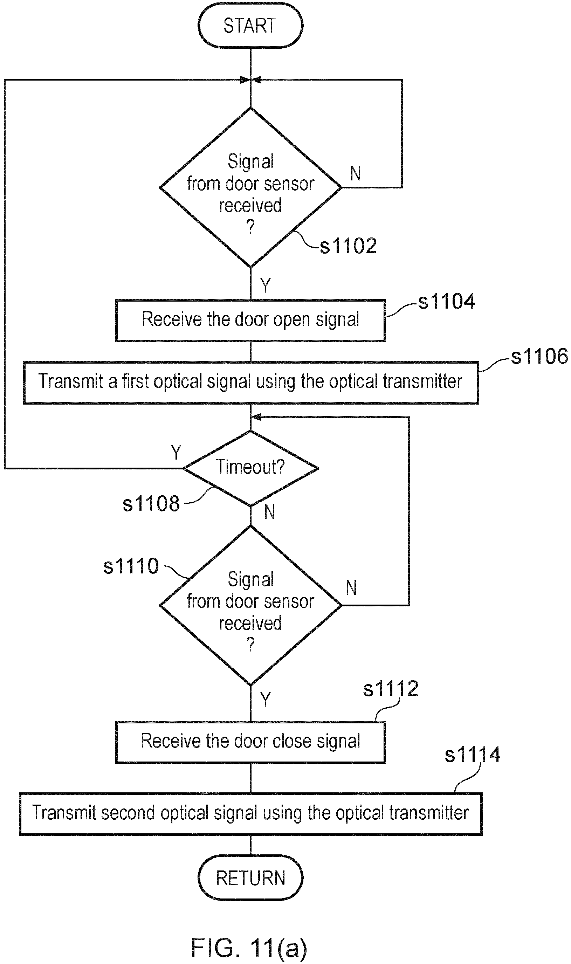

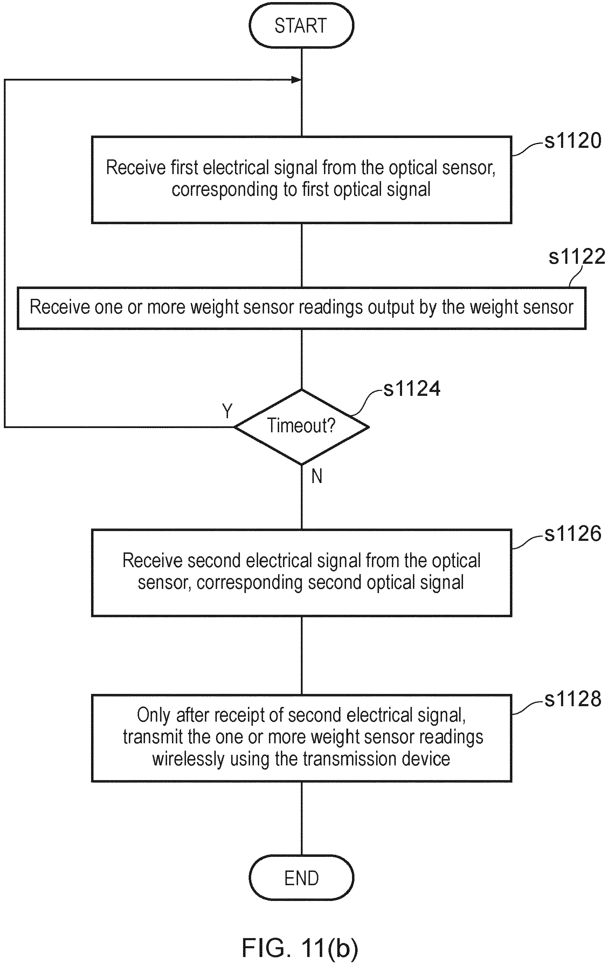

Figure 11(a) is a flow chart of the operations performed by a controller 1012 (Fig. 10(b)) of the cabinet 1000, in an embodiment. Figure 11(b) is a flow chart of the operations performed by a processor 302 (Fig. 3) of the or each weight sensor unit 122, in an embodiment.

Referring initially to Fig. 11(a), first the controller 1012 waits (block s1102) for an input from the door sensor 1008. If issued by the door sensor 1008, the door open signal is received at block s1104. In response to the door open signal, a first optical signal is transmitted using the optical transmitter 1010 at block s1106. The controller 1012 waits (block s1108) for a predetermined period and if no further input is received, there is a timeout and processing returns to block s1102.

If, on the other hand, there is no timeout, the controller 1012 waits (block s1110) for a further input from the door sensor 1008. If issued by the door sensor 1008, the door close signal is received at block s1112. Finally, in response to the door close signal, a second optical signal is transmitted using the optical transmitter at block s1114.

In an embodiment, the first optical signal is different to the second optical signal. In an embodiment, the first optical signal comprises a train of N1 optical pulses and the second optical signal comprises a train of N2 optical pulses, where N2 is not equal to N1. In an embodiment, (i) N2 is a x N1, where a is in the range 2-4, (ii) N1 is b x N2, where b is in the range 2-4 or (iii) or N1 is 2 and N2 is 4. In an embodiment, the first optical signal and/or second optical signal is an IR optical signal

In an embodiment, the second electrical signal is a zero-level signal corresponding to an absence of an optical signal.

In an embodiment, the controller 1012 has a secondary power source, whereby the controller 1012 is configured to cause the emission of the first optical signal and/or the second optical signal using the optical transmitter 1010 in the absence of power from a mains power source 1020. In an embodiment, the secondary power source is a battery.

In an embodiment, the controller is configured to receive weight sensor readings received wirelessly via the first wireless receiver or first wireless transceiver 1022.

In an embodiment, the controller transmits one or more weight reporting messages via the cellular transceiver or wired network transceiver, the one or more weight reporting messages including the weight sensor readings.

Figure 11(b) is a flow chart of the operations performed by a processor 302 (Fig. 3) of the or each weight sensor unit 122a, in an embodiment. Here, the weight sensor unit 122a includes the optical sensor 320 (Fig. 3) configured to output electrical signals in response to the receipt of optical signals, whereby the weight sensor unit 122a is controllable via optical signalling.

Initially, a first electrical signal is received (block s1120) from the optical sensor in response to the receipt thereby of a first optical signal. Next, one or more weight sensor readings output by the weight sensor are received (block s1122). In an embodiment, it is then determined (block s1124) whether a timeout has occurred, e.g., whether a predetermined period has elapsed. The predetermined period may be, for example, 3-5 minutes. If a timeout occurs, processing proceeds to block s1002.

In an embodiment, in the event that no timeout occurs, a second electrical signal is received from the optical sensor in response to the receipt thereby of a second optical signal (block s1126). Then, only after receipt of the second electrical signal, the one or more weight sensor readings are transmitted wirelessly using the transmission device 308 (block s1128).

In an embodiment, the first optical signal is different to the second optical signal. In an embodiment, the first optical signal comprises a train of N1 optical pulses and the second optical signal comprises a train of N2 optical pulses, where N2 is not equal to N1. In an embodiment, (i) N2 is a x N1, where a is in the range 2-4, (ii) N1 is b x N2, where b is in the range 2-4 or (iii) or N1 is 2 and N2 is 4.

In an embodiment, the first optical signal and/or second optical signal is an IR optical signal. In an embodiment, the transmission device 308 is configured to be operated in one of at least a first state in which the transmission device consumes power P1, and in a second state, in which the transmission device consumes power P2, wherein P2 is greater than P1. In an embodiment, the processor 302 is configured to switch the transmission device 308 from the first state to the second state only after only after receipt (i) of the door open signal and/or (ii) the door close signal after the door open signal. In an embodiment, in the first state the transmission device 308 is in deactivated mode, and in the second state the transmission device 308 is in activated mode whereby it is able to transmit the wireless signals. In an embodiment, (i) P1 is 2 to 50 times P2, or P1 is 5 to 15 times P2 or P1 is 10 times P2 and/or (ii) P3 is 2 to 50 times P4, or P3 is 5 to 15 times P4 or P1 is 10 times P2. In an embodiment, P1 is zero.

In an embodiment, after the door close signal and until the next door open signal the processor is configured not to poll the weight sensor 304 for a weight sensor reading and/or not to transmit the one or more weight sensor readings using the transmission device 308.

In an embodiment, the processor 302 is configured to transmit the wireless signals using the transmission device 308 at a given time at a settable signal strength S, corresponding to a range R of signal reception. In an embodiment, the transmission device 308 is configured to transmit wireless signals with a signal power sufficient to reach a wireless gateway or a wireless access point. In an embodiment, (i) the signal strength S corresponds to a range R of signal reception lying in the range of (i) 1 to 500m, (ii) 50 to 500m, (iii) 50 to 400m or (iv) 100 to 400m. In an embodiment, the transmission device is a BLE transmitter, and the wireless signals are BLE signals.

In an embodiment, after the door open signal and until the next door close signal the processor 302 is configured to repeatedly poll the weight sensor 304 to obtain a weight sensor reading, and to average the weight sensor reading obtained over a predetermined period lying within or contemporaneous with the period between the door open signal and until the next door close signal. In an embodiment, the processor 302 is configured to: poll the weight sensor 304 to obtain a weight sensor reading in response to receipt of the door open signal; and/or poll the weight sensor 304 to obtain a weight sensor reading in response to receipt of the door close signal; and/or average weight sensor readings in a period commencing at a time point a first predetermined delay period after the door open signal and/or ending at the next door close signal.

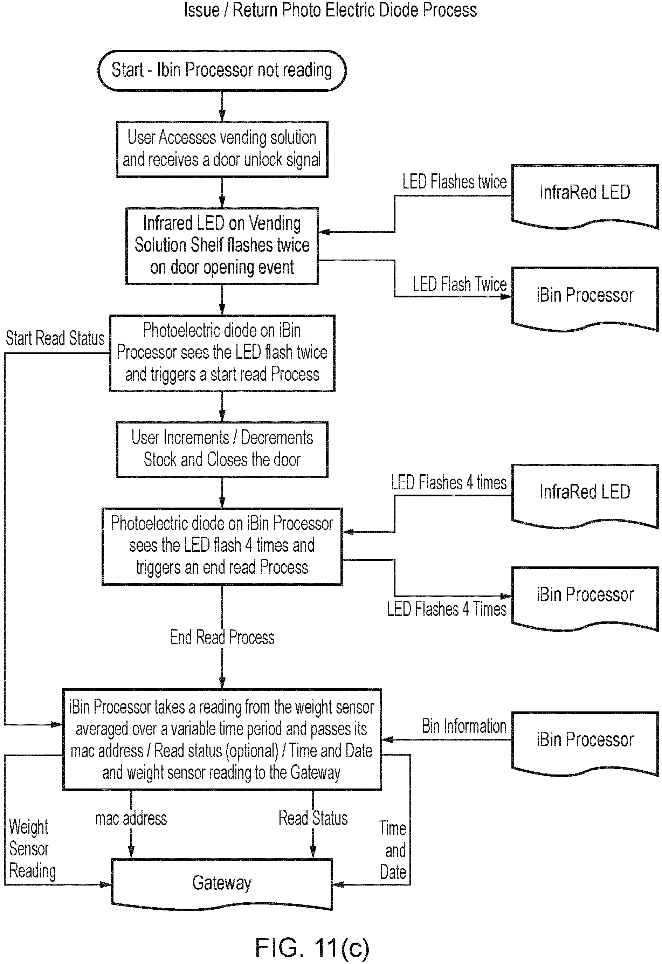

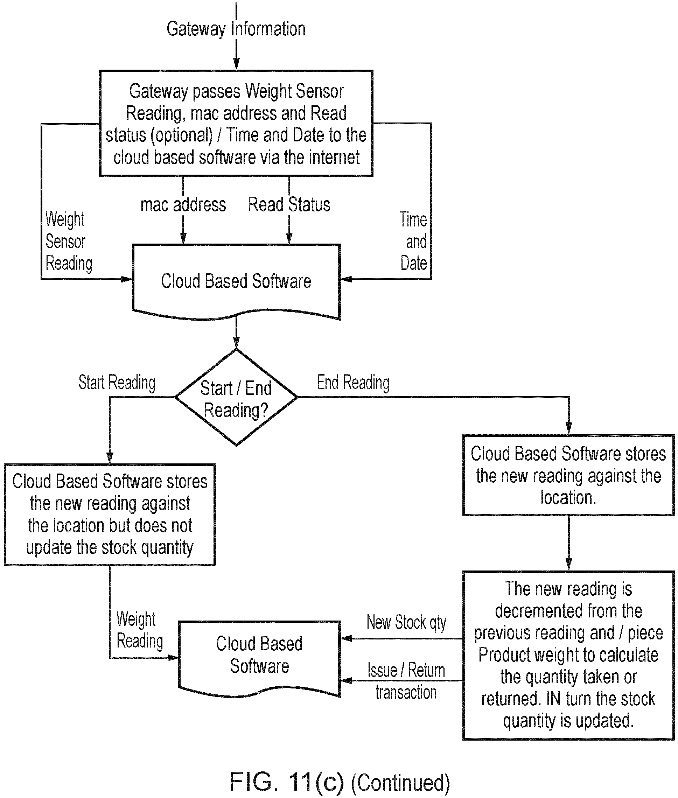

In an embodiment in which the weight sensor unit 122a is used in a stock monitoring system for monitoring the quantity of stock items in a respective dispensing unit 120a and or the number of stock items removed from or inserted/returned into a respective dispensing unit 120a, processing may proceed according to the flowchart of Fig. 11(c). To the extent appropriate, the operations of Fig. 11(a) and 11(b) may be combined with one, some or all of the operations in Fig. 11(c).

An advantage is that, a WSU 122a operates in a low power state until signalled optically to take measurements and transmit weight sensor readings. This reduces the amount of power consumed by the WSU 122a, and extends the life of the (battery of the) WSU 122a.

Further advantages of the foregoing include that when a lid is lifted, the WSU 122a can be activated to read the weight sensor 302 and broadcast the information to the (BLE) gateway 108a. This means the transmitter device (BLE module) consumes less power as it can be turned off between events. This extends the life of the WSU 122a significantly in the field between battery changes or recharges. The lid on bins in WSU 122a eliminates the requirement to read all the bins within a cabinet when an access door has been opened. Therefore, a number of WSUs 122 on an open rack no longer need to be on (activated), and waiting for a change in weight. The WSU 122a is only activated when the lid sensor is triggered. Only the bins that are accessed by the user need to be read. This reduces the number of messages that the (BLE) gateway 108a needs to manage per operation as all the bins within a cabinet do not need to be read. It also decreases the noise from erroneous readings of light items that trigger changes in measurement when there have been no transactions. This has the effect of increasing the inventory accuracy of the entire cabinet. The lid sensor in the form of a reed switch or magnetic sensor is preferable to an accelerometer, as the accelerometer may initiate readings due to a passing truck, or nearby bins being restocked.

### Portable wireless device.

**Figure 12** illustrates the internal configuration of an electronic device (portable wireless device) 201 according to one or more embodiments. In the illustrated example embodiment, the electronic device 201 is a communication device, such as a mobile communication device. In at least some example embodiments, the electronic device 201 is a two-way communication device having data and voice communication capabilities, and the capability to communicate with other computer systems, for example, via the Internet. Depending on the functionality provided by the electronic device 201, in various example embodiments, the electronic device 201 may be a multiple-mode communication device configured for data and voice communications, a mobile telephone such as a smart phone, a tablet computer such as a slate computer, a wearable computer such as a watch, a PDA (personal digital assistant), or a computer system. In other example embodiments, the electronic device 201 may be of a type not specifically listed above.

The electronic device 201 includes a housing (not shown), housing the components of the electronic device 201. The internal components of the electronic device 201 are constructed on a printed circuit board (PCB). The electronic device 201 includes a controller including at least one processor 240 (such as a microprocessor) which controls the overall operation of the electronic device 201. It will be appreciated that, in at least some example embodiments, the controller may, instead of or in addition to the processor 240, include an analog circuit or other types of circuits capable of performing a part or all of the functions of the processor 240 that are described herein. The processor 240 interacts with device subsystems such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, and/or a touch-sensitive overlay associated with a touchscreen display 204), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as the touchscreen display 204, one or more speakers 256, or other output interfaces 205), a short-range communication subsystem 262, a global positioning system (GPS) 266 for communicating with a GPS satellite network, and other device subsystems generally designated as 264. Some of the subsystems shown in FIG. 4 perform communicationrelated functions, whereas other subsystems may provide "resident" or on-device functions. Although referred to herein as "short-range communication subsystem 262", as compared with NFC range, the communication subsystem 262 may, as the term is used herein, involve "intermediate-range" communication (e.g., a meter to a few hundred metres), as discussed hereinabove.

The electronic device 201 includes a touchscreen display 204. The touchscreen display 204 may be constructed using a touch-sensitive input surface connected to an electronic controller. The touch-sensitive input surface overlays the touchscreen display 204 and may be referred to as a touch-sensitive overlay. The touch-sensitive overlay and the electronic controller provide a touch-sensitive input interface 206 and the processor 240 interacts with the touch-sensitive overlay via the electronic controller. That is, the touchscreen display 204 acts as both an input interface 206 and an output interface 205.

The electronic device 201 is connected to a communication network such as a wireless network 101 which may include one or more of a Wireless Wide Area Network (WWAN) and a Wireless Local Area Network (WLAN) or other suitable network arrangements. In at least some example embodiments, the electronic device 201 is configured to communicate over both the WWAN and WLAN, and to roam between these networks. In at least some example embodiments, the wireless network 101 may include multiple WWANs and WLANs.

The particular design of the wireless communication subsystem 211 depends on the wireless network 101 in which the electronic device 201 is intended to operate. The electronic device 201 may send and receive communication signals over the wireless network 101 after the required network registration or activation procedures have been completed.

In at least some example embodiments, the auxiliary input/output (I/O) subsystems 250 may include an external communication link or interface, for example, an Ethernet connection. The electronic device 201 may include other wireless communication interfaces for communicating with other types of wireless networks, for example, a wireless network such as an orthogonal frequency division multiplexed (OFDM) network. The auxiliary I/O subsystems 250 may include a pointing or navigational tool (input device) such as a clickable trackball or scroll wheel or thumbwheel, or a vibrator for providing vibratory notifications in response to various events on the electronic device 201 such as receipt of an electronic message or incoming phone call, or for other purposes such as haptic feedback (i.e., touch feedback).

In at least some example embodiments, the electronic device 201 also includes a removable memory module 230 (typically including flash memory) and a memory module interface 232. Network access may be associated with a subscriber or user of the electronic device 201 via the memory module 230, which may be a Subscriber Identity Module (SIM) card for use in a GSM network or other type of memory module for use in the relevant wireless network. The memory module 230 may be inserted in or connected to the memory module interface 232 of the electronic device 201 in order to operate in conjunction with the wireless network 101.

The electronic device 201 may store data 227 in an erasable persistent memory, which in one example embodiment is the flash memory 244. In various example embodiments, the data 227 may include service data having information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory (e.g., flash memory 244) of the electronic device 201 may be organized, at least partially, into a number of databases or data stores each containing data items of the same data type or associated with the same application. For example, email messages, contact records, and task items may be stored in individual databases within the memory of the electronic device 201.

In at least some example embodiments, the electronic device 201 is provided with a service routing application programming interface (API) which provides an application with the ability to route traffic through a serial data (i.e., USB) or Bluetooth<^{®}>(Bluetooth<^{®}>is a registered trademark of Bluetooth SIG, Inc.) connection to the host computer system using standard connectivity protocols.

The electronic device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The short-range communication subsystem 262 is an additional optional component which provides for communication between the electronic device 201 and different systems or devices, which need not necessarily be similar devices. For example, the short-range communication subsystem 262 may include an infrared device and associated circuits and components, or a wireless bus protocol compliant communication mechanism such as a Bluetooth<^{®}>communication module to provide for communication with similarly-enabled systems and devices. In other embodiments, the short-range communication subsystem 262 comprises a Near Field Communication (NFC) interface.

In at least some example embodiments, the electronic device 201 may include a GPS 266. The GPS 266 communicates with a GPS compatible satellite network to provide location and time related information of the electronic device 201. For example, the GPS 266 may, in conjunction with an integrated or separate mapping application, provide current or past locations of the electronic device 201 on a map, notify a user of nearby landmarks on the map, provide driving directions and estimated travel time based on a current location and a planned destination, etc.

A pre-determined set of applications that control basic device operations, including data and possibly voice communication applications may be installed on the electronic device 201 during or after manufacture. Additional applications and/or upgrades to an operating system 223 or software applications 225 may also be loaded onto the electronic device 201 through the wireless network 101, the auxiliary I/O subsystem 250, the data port 252, the short-range communication subsystem 262, or other suitable device subsystems 264. The downloaded programs or code modules may be permanently installed, for example, written into the program memory (i.e., the flash memory 244), or written into and executed from the RAM 246 for execution by the processor 240 at runtime.

The processor 240 operates under stored program control and executes software modules 221 stored in memory such as persistent memory, for example, in the flash memory 244. As illustrated in FIG. 4, the software modules 221 include operating system software 223, and other software applications 225. In the example embodiment of FIG. 4, the operating system software 223 includes a user interface module 226 (i.e., the user interface module 226 is part of the operating system software 223). However, in other example embodiments, the user interface module 226 may be implemented as part of another application 225, or as a separate stand-alone application 225.

The electronic device 201 may include a range of additional software applications 225, including a stock item dispensing/tracking application as used in embodiments described herein, sometimes referred to as the "App". Each of the software applications 225 may include layout information defining the placement of particular fields and graphic elements (for example, text fields, input fields, icons, etc.) in a graphical user interface (GUI) associated with the application. A GUI is a type of user interface that allows the user to interact with a device and/or an application utilizing images, icons, text and other selectable graphical elements. The GUI represents information and actions available to the user through graphical icons and visual indicators. The software applications 225 may also include touch gesture information defining functionalities associated with the touch gestures received via the touchscreen display 204. The touch gesture information may define GUI specific user input gestures to perform functions within the GUI. For example, a software application 224 may determine a finger swiping movement (i.e., a touch gesture) on the touchscreen display 204 as a scrolling function to navigate within the GUI (for example, scrolling a display page provided by the GUI).

The software modules 221 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

The user interface module 226 provides a platform for a user to interact with one or more software applications 225. For example, the user interface module 226 may function as a user interface for one or more associated software applications 225 (and provide one or more display pages that a user may interact with). The user interface module 226 may enable a user to execute the various functions and features of the associated one or more software applications 225.

In at least some example embodiments, the user interface module 226 may include information for manipulating a display page provided by the user interface module 226 for associated software applications 225 based on the instructions input by a user. For example, the user interface module 226 may include touch gesture information defining particular functionalities for manipulating the display page based on touch gestures received from a user on the touchscreen display 204. For example, the user interface module 226 may receive a touch gesture that is a swiping gesture on the touchscreen display 204, and in response, manipulate the display page based on the appropriate functionality of the swiping gesture. For example, in at least some example embodiments, the swiping gesture may correspond to a scrolling function and accordingly, cause the user interface module 226 to manipulate the display page by scrolling the display page.

Although the present application uses the term "pages", it will be understood that in some contexts and implementations the term "pages" may be interchangeable with "windows", "layers" or other such terms.

In at least some example embodiments, the user interface module 226 may only display one display page. In such example embodiments, portions of the display page may also be independently and simultaneously manipulated based on gestures input by the user on different portions of the display page. For example, the display page may be displayed to encompass the first portion and the second portion of the touchscreen display 204. The first control element is associated with a first portion of the display page displayed in the first portion of the touchscreen display 204, and the second control element is associated with a second portion of the display page displayed on the second portion of the touchscreen display 204. Accordingly, in such example embodiments, the first event may include manipulating the first portion of the display page based on the first touch gesture input on the first portion of the touchscreen display 204 while the second event may include manipulating the second portion of the display page based on the second touch gesture input on the second portion of the touchscreen display 204.

Specific functions and features of the user interface module 226 will be discussed in greater detail below.

Additionally, as mentioned above, the user interface module 226 may be associated with one or more software applications 225. Accordingly, the functions may be implemented by the user interface module 226 with respect to a variety of different applications.

It will be appreciated that in at least some example embodiments, the operating system 223 may perform some or all of the functions of the user interface module 226. In other example embodiments, the functions or a portion of the functions of the user interface module 226 may be performed by one or more other applications. Further, while the user interface module 226 has been illustrated as a single block, the user interface module 226 may include a plurality of software modules. In at least some example embodiments, these software modules may be divided among multiple applications.

### Asset tag

As noted with respect to Figs 10(f) and 10(g), an asset 602 may be attached to an asset 1030.

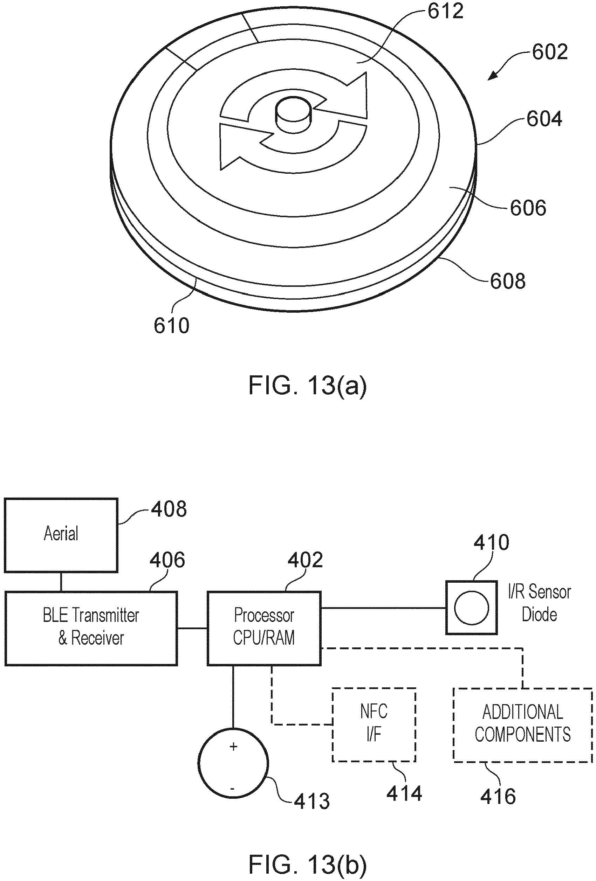

Figure 13(a) is a perspective view of an asset tag according to an embodiment, and Figure 13(b) is a block diagram of the electronics of the asset tag of Fig. 13(a).

As seen in Fig. 13(a), the asset tag 602 comprises a housing 604 may be made of any suitable plastics material and formed by moulding techniques that are well known in the art. The housing 604 may be moulded as a unitary housing, or may be formed by two housing halves 606, 608 which are joined by suitable plastics welding techniques at joint 610.

As seen in Fig. 13(b), the asset tag 602 comprises a processor 402, to which is coupled to a first wireless interface 406 (e.g., a BLE transmitter or transceiver) that communicates via antenna 408. The processor 402 may be coupled to an optical sensor 410, such as an IR diode detector.

Optionally, the processor 402 is coupled to a third wireless interface 414, such as an NFC transmitter or transceiver, for example in order to be programmed - via a write command received from another NFC equipped device, such as a wireless portable device 201, such as a smartphone. Optionally, the processor 402 is coupled to additional components 416. Preferably, all components of the asset tag 602 are powered by a battery 413. Depending upon the mode (see 'Mode control' hereinafter), one some or all of the components 406, 414 and 416 may be powered by the battery 413 at a given time.

### Setup of bin in cabinet

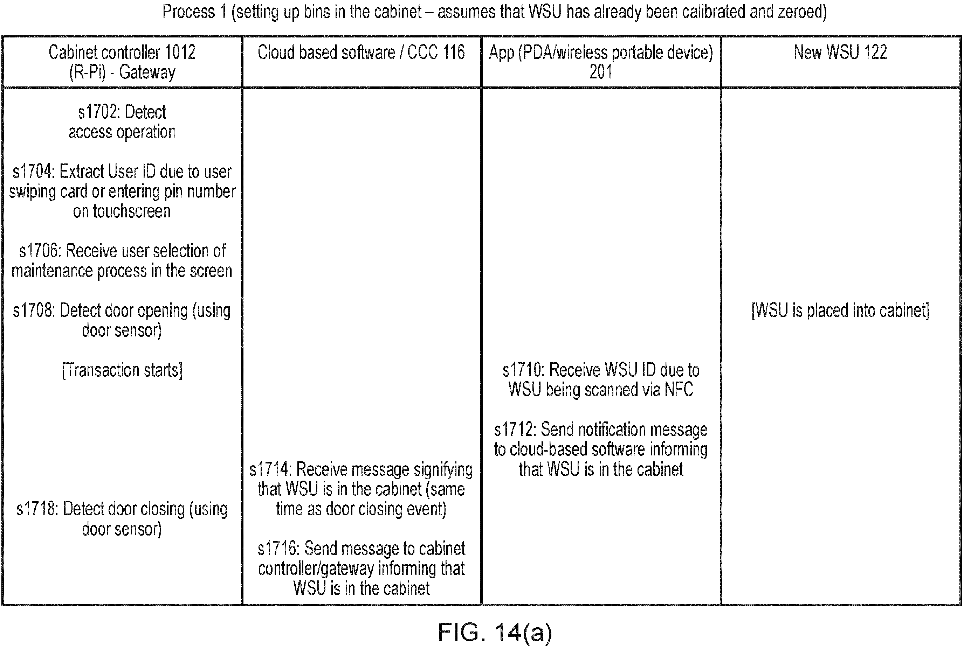

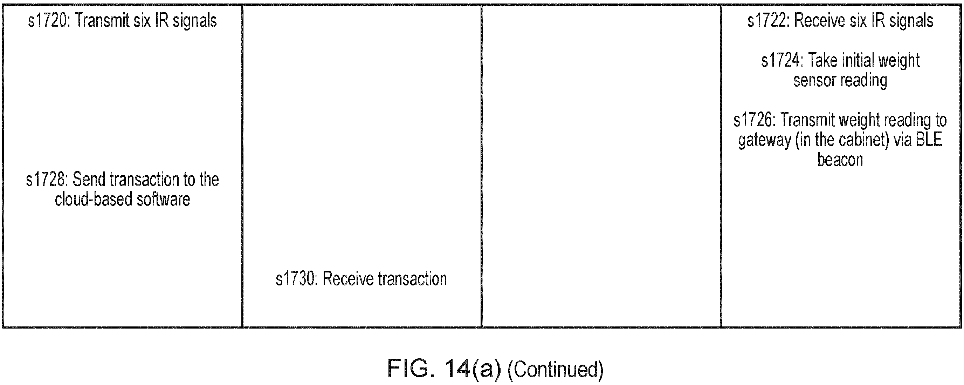

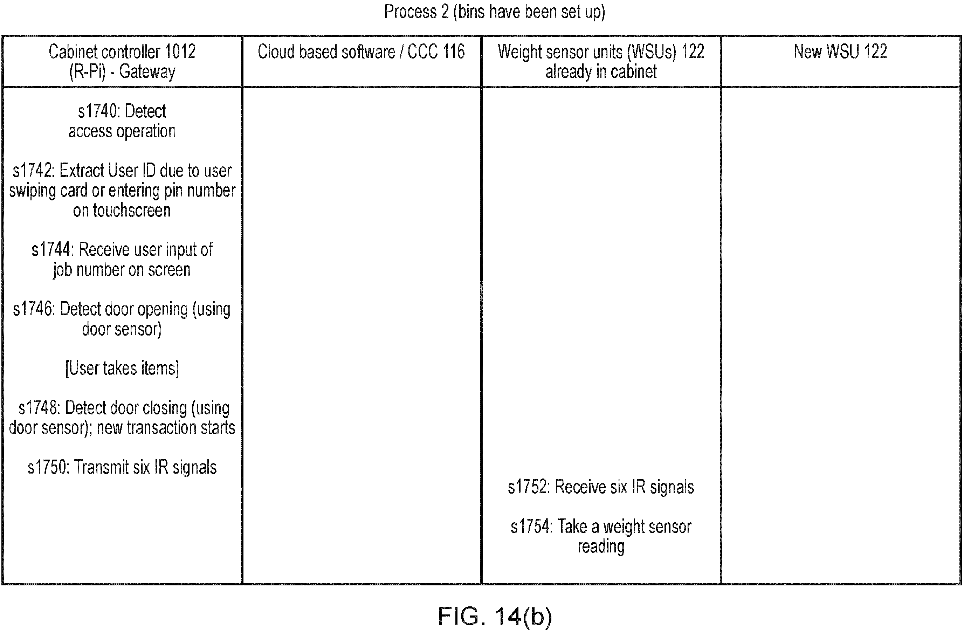

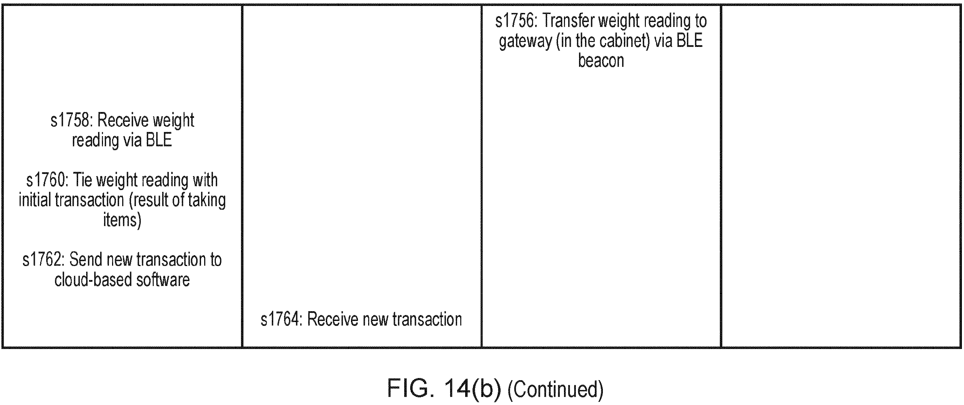

Figure 14(a) shows the operations performed at the cabinet controller (R-Pi) - Gateway, Cloud based software / CCC, App (PDA/wireless portable device) and a WSU newly inserted in the cabinet in an embodiment, in an initial operation; and Figure 14(b) shows the operations performed at those devices in a subsequent (weight sensing /quantity determination) operation.

In one aspect, there is provided a system for monitoring the presence and/or quantity of stock items in a dispensing enclosure, the system comprising: the dispensing enclosure of any of the embodiments disclosed hereinabove (e.g. cabinet 1000 of Fig.10); a wireless portable device of any of the embodiments disclosed hereinabove (e.g. Fig.12); and a central control computer of any of the embodiments disclosed hereinabove (e.g. CCC 116) coupled to the cabinet controller and to the wireless portable device via one or more networks. In operation, a processor 240 of the wireless portable device is configured to: in response to the wireless portable device being tapped on or placed in proximity to a short-range wireless transceiver of a weight sensor unit, receive a WSU ID for that weight sensor unit; and send a first notification message to the central control computer, the notification message including the WSU ID and indicating that the WSU associated with the WSU ID is in the dispensing enclosure; wherein the central control computer is configured to, in response to receiving the first notification message, send a second notification message to the controller indicating that the WSU associated with the WSU ID is in the dispensing enclosure;
wherein the controller is configured to, in response to a door of the dispensing enclosure being closed, transmit a first optical signal using an optical transmitter; and wherein the WSU associated with the WSU ID is configured to, in response to receipt thereby of a first optical signal, wirelessly transmit a first weight sensor reading to the controller.

In another aspect, there is provided a system for monitoring the presence and/or quantity of stock items in a dispensing enclosure, the system comprising: the dispensing enclosure of any of the embodiments disclosed hereinabove (e.g., cabinet 1000 of Fig.10); and a central control computer of any of the embodiments disclosed hereinabove (e.g., CCC 116) coupled to the cabinet controller 1012 via one or more networks. In operation, the cabinet controller is configured to, in response to a door of the dispensing enclosure being closed for a first time, transmit a first optical signal using an optical transmitter; wherein a weight sensor unit (for example of any of the embodiments disclosed hereinabove, e.g. Fig. 3) is configured to, in response to receipt thereby of the first optical signal, wirelessly transmit a first weight sensor reading to the cabinet controller; wherein the cabinet controller is configured to, in response to a door of the dispensing enclosure being closed for a second time, transmit a second optical signal using an optical transmitter; wherein the weight sensor unit is configured to, in response to receipt thereby of the second optical signal, wirelessly transmit a second weight sensor reading to the cabinet controller; wherein the cabinet controller is configured to, after receipt of the second weight sensor reading, transmit an activity record message to the central control computer, the activity record message being based on at least the second weight sensor reading and comprising (i) a WSU ID of the weight sensor unit and (ii) a current quantity of stock items calculated from the second weight sensor reading and optionally a previous quantity of stock items calculated from the first weight sensor reading, and (iii) optionally one, a subset or all of a temperature of the WSU, a battery charge status of the WSU and the second weight sensor reading.

In another aspect, there is provided a wireless portable device 201 for use in the abovementioned system for monitoring the presence and/or quantity of stock items in a dispensing enclosure, the wireless portable device being according to any of the embodiments disclosed hereinabove (e.g. Fig.12) comprising: a first memory configured for storage of programs and data; a display configured for displaying graphical data; an input device configured to receive user inputs; an output device configured to output visual or audible alerts; the short-range wireless transceiver; and a first processor, the first memory, display, input device and short-range transceiver being connected to the first processor.

In another aspect, there is provided a weight sensor unit 122a for use in either of the abovementioned systems for monitoring the presence and/or quantity of stock items in a dispensing enclosure, the weight sensor unit 122a being for example in accordance with any of the embodiments disclosed hereinabove, e.g. Fig. 3), The processor 302 of the WSU 122a is preferably configured to: receive a first electrical signal from the optical sensor in response to the receipt thereby of a first optical signal; receive one or more first weight sensor readings output by the weight sensor, receive a second electrical signal from the optical sensor in response to the receipt thereby of a second optical signal; and only after receipt of the second electrical signal, transmit the one or more weight sensor readings wirelessly using the transmission device.

Figure 14(a) shows the operations performed at the cabinet controller 1012 (R-Pi) - Gateway, Cloud based software / CCC 116, App (PDA/wireless portable device 201) and a WSU 122a newly inserted in the cabinet, in an embodiment - in an initial operation (to set up the new WSU 122a for energy saving operation). More particularly, the operation is as follows. (It will be appreciated that in the processes of Figs 14(a) and 14(b), one or some of the steps or operations may be omitted or implemented differently, and that a different order of steps may be used.)

The cabinet controller 1012 (also referred to as an (internal) gateway) may first detect (s1702) an access operation at the cabinet 1000 (e.g., via a card reader or touchscreen 1018; Fig. 10), and extract (s1704) a User ID due to a user swiping a card or entering a pin number on the touchscreen. Next, the cabinet controller 1012 may receive (s1706) a user selection of maintenance process in the screen.

Then, door opening may be detected (e.g., using door sensor 1008) at s1708.

Activity has started, and a new WSU 122a is placed into cabinet. As the user has access to the cabinet, he can tap his PDA 201 on the new WSU 122a and receive s1710 a WSU ID due to WSU being scanned via NFC. In an embodiment, the PDA 201 receives the WSU ID only. In an embodiment, the cabinet ID is acquired by user selecting the cabinet they wish to operate on, using the app on the PDA 201. This step may also include the user specifying which product (from a list of products received from the cloud-based software) is inside the bin associated with the WSU 122a.

Next, the PDA 201 sends (s1712) a notification message to cloud-based software (CCC 116) informing that WSU 122a is in the cabinet 1000. In an embodiment, the app sends to cloud-based software/CCC 116 a "New WSU added" message, with message content: (1) mobile device ID (of PDA /wireless portable device on which app is running); (2) Cabinet/controller ID; and (3) (new) WSU ID. Plus optionally date time of insertion.

Then, the Cloud based software / CCC 116 receives (s1714) the message signifying that WSU 122a is in the cabinet 1000 (which may be at same time as door closing event, detected at step s1718).

The Cloud based software / CCC 116 then sends (s1716) a message to the cabinet controller/internal gateway 1012 informing that WSU 122a is in the cabinet 1000.

In this embodiment, the cabinet controller transmits (s1720) six IR signals (e.g., a train of six pulses, but more or fewer pulses, or another, non-pulsed, form of optical signal, may be used). This is in response to detection of door opening (e.g., using door sensor 1008) at s1708. (In an embodiment, this step is independent of the previous one involving the PDA. The door close event triggers a read command on the WSU (see next steps) using IR. This then results in a weight sensor reading that is received by the cabinet controller and forwarded to the cloud-based software, confirming that the WSU is in the cabinet (all covered in next steps))

The (newly installed) WSU 122a then receives (s1722) the six IR signals, takes (s1724) an initial weight sensor reading, and transmits (s1726) the weight reading to gateway (in the cabinet 1000) via BLE beacon.

Upon receipt of the weight reading, the cabinet controller sends (s1728) an activity record (here referred to as a transaction) to the cloud-based software. In an embodiment, the cabinet controller 1012 receives the weight reading and forwards it to cloud-based software as "new WSU received" transaction (message).

Finally, the cloud-based software/CCC receives (s1730) the transaction. In an embodiment, the message content is WSU ID, weight sensor reading (current), temperature of bin, battery level of bin. No flag to denote that this is WSU triggered by IR event. WSU only sends weight upon IR signal. Cabinet/controller ID is not sent because the cloud-based software already knows which cabinet the WSU is in because of the setup step earlier on.

**Figure 14(b)** shows the operations performed at the cabinet controller 1012 (R-Pi) - Gateway, Cloud based software / CCC, App (PDA/wireless portable device) and a WSU newly inserted in the cabinet in an embodiment in a subsequent (weight sensing /quantity determination) operation, i.e., after the bin(s) (i.e., WSUs 122a) has (have) been set up.

First, the cabinet controller 1012 detects (s1740) an access operation and extracts (s1742) a User ID due to user swiping card or entering pin number on touchscreen, as in Fig. 14(a). In addition, the cabinet controller. The cabinet controller 1012 may receive (s1744) user input of a job number on the touchscreen.

The cabinet controller 1012 detects (s1746) door opening (using door sensor), and the user then takes items out. Then, the cabinet controller 1012 detects (s1748) door closing (using door sensor); a new transaction thus starts. Next, the cabinet controller 1012 transmits (s1750) six IR signals (e.g., a train of six pulses, but more or fewer pulses (e.g., 4-8), or another, distinctive non-pulsed, form of optical signal, may be used).

Consequently, the WSU 122a receives (s1752) the six IR signals, takes a weight sensor reading (s1754) and transfers (transmits) (s1756) the weight reading to gateway (in the cabinet) via BLE beaconing.

As a result, the cabinet controller 1012 receives (s1758) the weight reading via BLE, ties (associates) (s1760) the weight reading with initial transaction (result of taking items), and sends (s1762) the new transaction to cloud-based software.

In an embodiment, the new transaction includes WSU ID, temperature of bin, battery level of bin. It also takes the current WSU weight sensor value, and calculates the quantity based on the part weight of the product inside the bin (part weight data is taken from the product data, from the product selected during one of the first setup items above). In an embodiment, once the quantity has been established, current quantity is put into the new transaction, along with previous quantity (as this was saved as a result of the previous transaction. If this is the first transaction for this WSU, previous quantity is sent as 0.). In an embodiment, the New transaction includes: WSU ID, temperature, battery, old quantity, new quantity, weight sensor reading.

With the foregoing configuration, WSUs 122a may be conveniently and flexibly deployed anywhere throughout a site, and their setup (e.g., using a smartphone) for energy saving subsequent operation is greatly facilitated.

### Lidded shelf

In relation to the multi-compartment dispensing unit disclosed herein (as referred to as a "lidded shelf"), the terms "bin" and "compartment" are used interchangeably. For the multi-compartment dispensing unit (lidded shelf) discussed below) the unit may use any of the techniques (e.g., signalling, triggering and measurement) as mentioned above in relation to the techniques of Figs 1-12.

**Figures 15(a) and 15(b)** are perspective views of a multi-compartment dispensing unit in an embodiment, in a case of a 6x4 array of compartments (bins); and **Figure 15(c)** is an enlarged perspective view of the multi-compartment dispensing unit of Figures 15(a) and 15(b). Figure 16(a) is a perspective view of a multi-compartment dispensing unit in an embodiment, in a case of a 4x2 array of compartments (bins); **Figures 16(b)** and (c) are enlarged perspective views of the hinge assembly of the multi-compartment dispensing unit of Fig. 16(a), showing the lid in open and closes positions, respectively; **Figure 16(d)** is an exploded front perspective view from below of the multi-compartment dispensing unit of Fig. 16(a); **Figures 16(e)** **and** **16(f)** are rear perspective views from below of the multi-compartment dispensing unit of Fig. 16(a); Figure 16(g) is an enlarged perspective view of the compartment circuitry (PCB) of the multi-compartment dispensing unit of Fig. 16(a).

Referring to Figs 15(a) to (c) and Figs 16(a) to (g), a multi-compartment dispensing unit 1802 is therein depicted. The dispensing unit 1802 may comprise a housing, generally designated 1804.

A main body 1806 may be disposed within the housing 1804 and have an upper surface 1808 1808 and a lower surface 1810, the lower surface 1810 of the main body 1806 being disposed on and supported by a weight sensor arrangement 1812 within the housing 1804. The weight sensor arrangement 1812 may comprises (i) a plurality of load cells, (ii) a plurality of strain gauge load cells, and/or (iii) a load cell at or adjacent each of four corners of the housing. In an embodiment, a space is defined between the main body 1806 and the housing 1804 and below the main body 1806; and the dispensing unit circuitry and/or the weight sensor arrangement 1812 are disposed in the space.

There may be, disposed at the sides of the housing 1804, one or more mounting brackets, bores or screw holes (not shown) configured for cooperating with one or more respective mounting elements of a cabinet (not shown).

A plurality of compartments 1814 may be disposed in an array in the main body 1806. A plurality of compartment lids 1816 may be disposed on or near the upper surface 1808. Each compartment lid 1816 may be disposed at a respective opening of each compartment 1814 in the upper surface 1808, each compartment lid being rotatable (see Figs 14(a) and 15(a)) about an axis parallel to the plane of the upper surface 1808 between a closed position, in which the compartment lid 1816 closes and/or seals a respective compartment 1814, and a fully or partially open position.

For each compartment, there may be provided an electronically actuatable retention mechanism configured to releasably retain the compartment lid 1816 in the closed position. The retention mechanism may comprise, for each compartment, a spring biassing element 1818 (Figs 16(b) to 16(d)) for biassing the lid 1816 into the open position.

In an embodiment, the retention mechanism comprises, for each compartment: a first engagement element 1820 (Figs 16(b) to 156d)) disposed on the compartment lid 1816, a retaining device 1822 (Figs 16(e) to 16(g)) on the main body 1806 and compartment 1814. The retaining device 1822 may be configured whereby, when a compartment lid 1816 is in the closed position, a second engagement element 1824 of the retaining device 1822 engages the first engagement element 1820 and thereby retains the compartment lid in the closed position. In an embodiment, each first engagement element 1820 (i) is integral with a respective compartment lid 1816, (ii) comprises a projection having an L-shaped profile, (iii) comprises a flat main part and a transverse projection extending in a plane perpendicular to the plane of the flat main part and/or (iii) comprises a hole or hook therein for engagement by the second engagement element 1824. In an embodiment, each first engagement element 1820 comprises a L-shaped projection, the short part of the "L" being disposed at the distal end of the L-shaped projection.

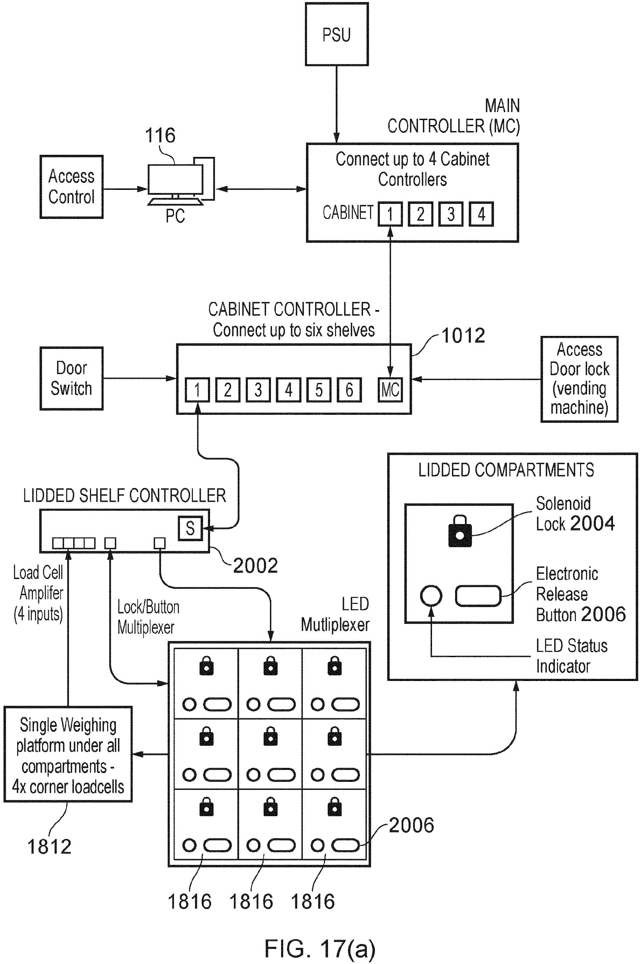

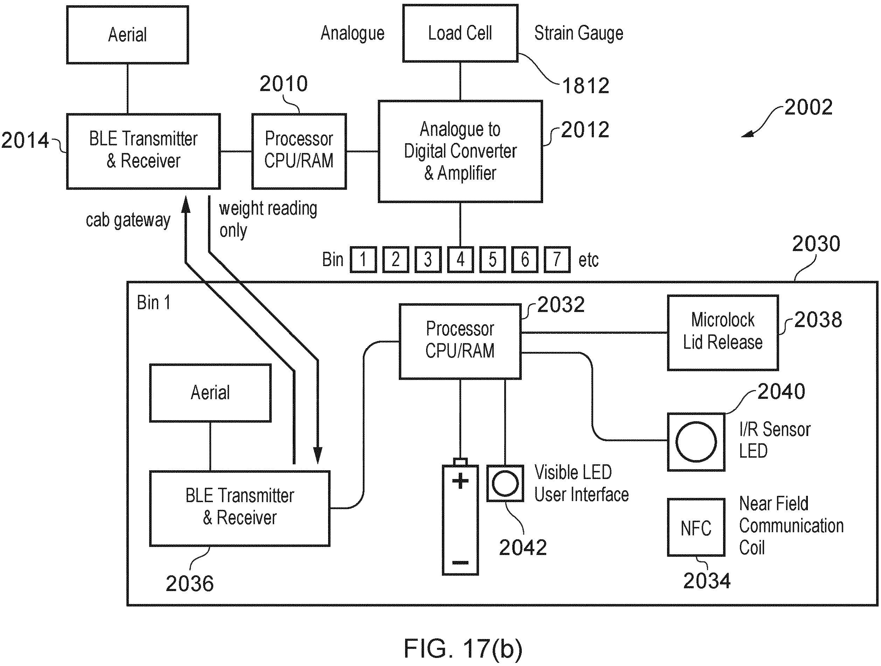

**Figure 17(a)** is a high-level diagram of a system for monitoring the presence and/or quantity of stock items or assets held in a dispensing enclosure (e.g., a cabinet) housing one or more multi-compartment dispensing units of Figs 15 and 16, in an embodiment; and **Figure 17(b)** is a block diagram of the electronics of the dispensing unit circuitry and the compartment circuitry of one compartment, in an embodiment.

In an embodiment, the second engagement element 1824 comprises a rod-like member movable, in use, along the axis of elongation thereof. In an embodiment, the retaining device 1822 comprises a solenoid 2004 (see Fig. 17(b)), and the second engagement element 1824 is the armature of the solenoid 2004. In an embodiment, when the compartment lid 1816 is in the closed position the second engagement element 1824 abuts the long part of the "L" and prevents movement of the short part of the "L" in a direction parallel to the plane of the long part of the "L".

Referring to Figs 17(a) and 17(b), for each compartment, there may be provided compartment circuitry 2030 (Fig. 17(b)) including a compartment processing circuitry 2032 configured to provide a release command to actuate the retention mechanism and thereby release the compartment lid.

In an embodiment, for each compartment, there is provided a shortrange (e.g., NFC) receiver 2034; and the compartment processing circuitry 2032 is configured to, in response to a portable wireless device 201 being tapped on or placed in proximity to the shortrange receiver 2034 by a user, (i) receive a compartment open command from the portable wireless device 201 and (ii) issue the release command to actuate the retention mechanism and thereby release the compartment lid 1816.

In an embodiment, for each compartment, there is provided a manually operable release button 2006 (Fig. 17(a)); and the compartment processing circuitry is configured to, in response to actuation of the manually operable release button 2006 by a user, issue the release command to actuate the retention mechanism and thereby release the compartment lid.

In an embodiment, for each compartment, the compartment circuitry includes a shortrange (e.g., BLE) transceiver 2036 coupled to the compartment processing circuitry 2032; and a lid closure sensor (e.g. implemented by microlock/solenoid 2038, or its drive signal status), coupled to the compartment processing circuitry 2032, the lid closure sensor being configured to output a lid close signal indicative of the compartment lid having been moved by a user from the open position to the closed position. In this embodiment, the compartment processing circuitry is configured to, in response to receipt of the lid close signal, transmit a compartment designation signal via the shortrange transceiver, the compartment designation signal comprising (i) the compartment ID of the compartment for which the lid close signal was received and (ii) the release command to actuate the retention mechanism.

In an embodiment, (i) the short-range wireless receiver comprises a NFC interface and/or (ii) the short-range wireless transceiver comprises a Bluetooth interface or a Bluetooth Low Energy, BLE, interface.

In an embodiment, for each compartment, the compartment circuitry 2030 includes an optical (e.g., IR) sensor 2040 for receiving signals from a cabinet controller 1012 in a cabinet 1000, as discussed further below. In an embodiment, for each compartment, the compartment circuitry 2030 includes a visual indicator element to indicate status of the compartment, such as an LED 2042.

Referring to Figs 17(a) and 17(b), the dispensing unit may further comprise dispensing unit circuitry 2002 (Fig. 17(a)), the dispensing unit circuitry comprising dispensing unit processing circuitry 2010 and, coupled thereto, the weight sensor arrangement 1812. The weight sensor arrangement 1812 may be configured to provide to the dispensing unit processing circuitry a weight sensor reading indicative of the current weight of the main body. The dispensing unit may further comprise a battery; and the dispensing unit circuitry, the compartment circuitry or all electronic components of the dispensing unit may be connected to and powered by the battery. The dispensing unit circuitry 2002 may further include, coupled to the dispensing unit processing circuitry 2010, an ADC 2012 for digitising readings received from the weight sensor arrangement 1812. The dispensing unit circuitry 2002 may further include, coupled to the dispensing unit processing circuitry 2010, a wireless (e.g., BLE) transceiver 2014, such as for communication with the controller 1012 of a cabinet 1000 (see below).

In an embodiment, the dispensing unit processing circuitry 2010 is configured to: receive a compartment designation signal; in response to receipt of the compartment designation signal, extract the compartment ID; receive the weight sensor reading from the weight sensor arrangement 1812; and associate the extracted compartment ID with the weight sensor reading and optionally store in a memory of the dispensing unit circuitry the extracted compartment ID in association with the weight sensor reading.

In an embodiment, the dispensing unit processing circuitry 2010 is configured to: receive a report activity command; and in response to the report activity command, transmit an activity message via the shortrange (e.g., BLE) transceiver, the activity message comprising, for each compartment for which a compartment designation signal was received and a respective weight sensor reading received, the compartment ID in association with the respective weight sensor reading.

In an embodiment, the dispensing unit circuitry 2002 further comprises an optical sensor (not shown) coupled to the dispensing processing circuitry, the optical sensor being configured to output electrical signals in response to the receipt of optical signals. In this embodiment, the dispensing processing circuitry is configured to receive a first electrical signal from the optical sensor in response to the receipt thereby of a first optical signal, the first electrical signal constituting the report activity command.

In an embodiment, the first optical signal comprises a train of N1 optical pulses, where (i) N1 is in the range 4-8 or (iii) N1 is in the range 5-7, or (iii) N1 is 6. In an embodiment, (i) the optical sensor is an infrared (IR) light sensor and/or (ii) the first optical signal is an IR optical signal.

In an embodiment, the compartment processing circuitry is coupled to the retaining device and is configured to provide, as the release command, a drive signal for activating a retaining device for moving the second engagement element 1824 out of engagement with the first engagement element 1820, thereby freeing a respective compartment lid 1816 for movement and thereby release the compartment lid.

One or more dispensing units may be disposed on one or more of the shelves of a cabinet 1000 as disclosed herein in relation to Figs 10(a) to 10(i), or mounted directly to interior parts of the cabinet housing 1002. The cabinet controller 1012 is configured (see Fig. 11) to receive a door close signal; and in response to the door close signal, transmit the first optical signal using the optical transmitter.

In an embodiment, the first optical signal comprises a train of N1 optical pulses, where (i) N1 is in the range 4-8 or (iii) N1 is in the range 5-7, or (iii) N1 is 6. In an embodiment, (i) the optical transmitter is an infrared (IR) light emitter or (ii) an IR LED and/or (iii) the first optical signal is an IR optical signal.

In an embodiment, the dispensing cabinet further comprises an access control device, the access control device being configured to receive from the user a user ID prior to the door being opened by the user and to transmit the user ID to the cabinet controller. In an embodiment, the cabinet controller is configured to: receive the activity message via the first wireless receiver or first wireless transceiver; extract from the activity message activity data, the activity data comprising, for each compartment for which a compartment designation signal was received and a respective weight sensor reading received, the compartment ID in association with the respective weight sensor reading; associate the user ID with activity data; and transmit an activity log to a remote computer via a network, the activity log comprising the user ID in association with the respective with activity data.

With the aforementioned techniques, detection of the removal or replacement of an asset/item down to compartment level is afforded (as well as controlling access to such assets, without the need for a separate weight sensor for each compartment.

Although Figure 16(a) illustrates a multi-compartment dispensing unit as being wired into the cabinet, in a preferred form one, some or all of the multi-compartment dispensing units within the cabinet are battery powered and communicate with the cabinet controller of the cabinet wirelessly (e.g., via Bluetooth LE).

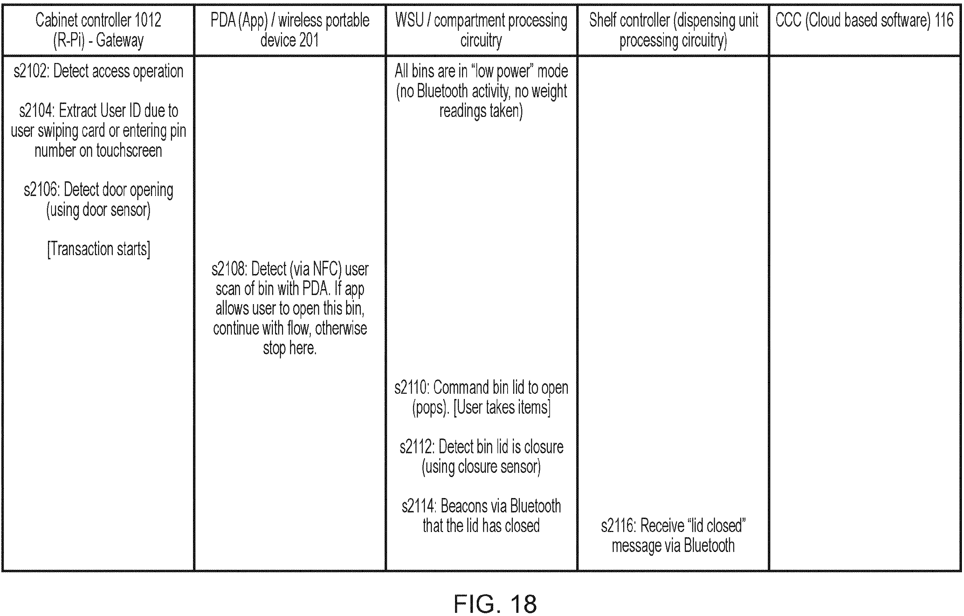

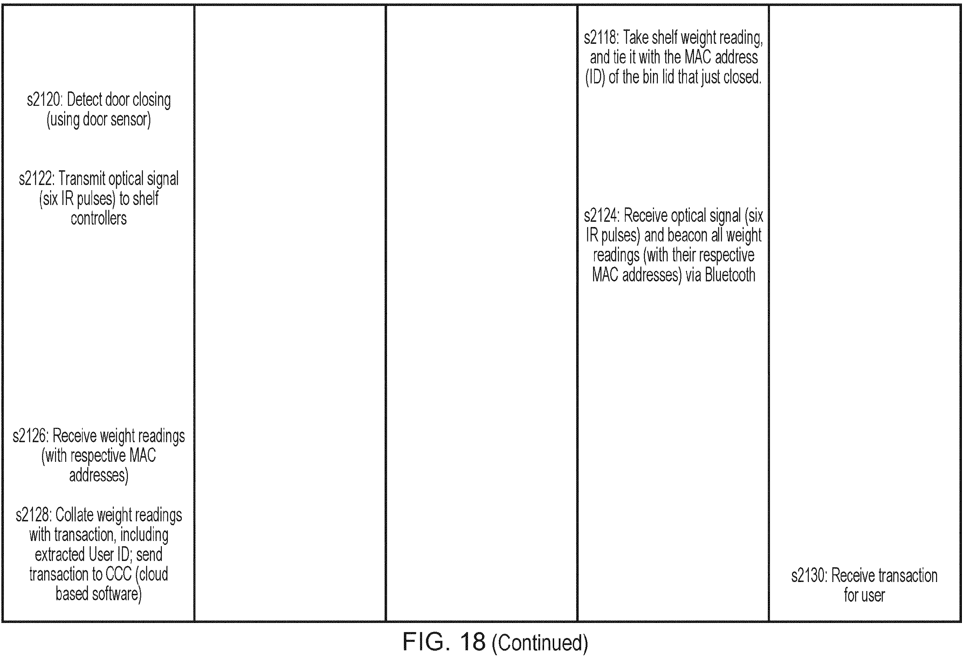

**Figure 18** shows the operations performed at the cabinet controller 1012 (R-Pi) - Gateway, a PDA (App) / wireless portable device 201, a WSU 122a (compartment processing circuitry 2030), the Shelf controller (dispensing unit processing circuitry 2002) and at the CCC (cloud-based software) 116 in a weight sensing /quantity determination process, using the multi-compartment dispensing unit 1802 of Figs 15 and 16, in an embodiment.

In the illustrated processes, not all steps may be essential, and it will be appreciated that one or more of the steps may be performed in a different order. Each step has an `s' as a suffix. Initially, all bins are in "low power" mode (no Bluetooth activity, no weight readings taken).

The steps performed at the cabinet controller 1012 (Fig. 2(b)) may comprise: s2102: detecting an access operation (e.g. at card reader / touchscreen); s2104: extracting a User ID due to user swiping card or entering pin number on touchscreen; and s2106: detecting door opening (using the door sensor). A Transaction (activity record) has thus been started.

The steps performed at the PDA (App) / wireless portable device 201 (Fig. 12) may comprise: s2108: detecting (via NFC) user scan of bin (WSU 122) with a PDA. If the app allows the user to open this bin, processing continues, otherwise it is terminated.

The steps performed at the WSU / compartment processing circuitry may comprise: s2110: commanding the bin (compartment) lid to open (it pops open under spring bias). [At this point, the user takes items.] The steps performed at the WSU / compartment processing circuitry may further comprise: s2112: detecting bin (compartment) lid is closed (using closure sensor); and s2114: beaconing (transmitting) via Bluetooth that the lid has closed.

The steps performed at the Shelf controller (dispensing unit processing circuitry) may comprise: s2116: receiving a "lid closed" message via Bluetooth; and s2118: taking a shelf weight reading, and tying it with the MAC address (ID) of the bin lid that just closed.

The steps performed at the cabinet controller 1012 (Fig. 10(b)) may further comprise: s2120:
detecting door closing (using door sensor); and s2122: transmitting an optical signal (e.g., six IR pulses) to the shelf controller(s). Although the optical signal may comprise 6 pulses of IR, any suitable number of pulses may be used (e.g., 2-10, or 4 to 8).

The steps performed at the Shelf controller (dispensing unit processing circuitry) may further comprise: s2124: receiving the optical signal (six IR pulses) and beaconing all weight readings (with their respective MAC addresses, i.e., of compartment circuitry) via Bluetooth LE.

The steps performed at the cabinet controller 1012 (Fig. 2(b)) may further comprise: s2126: receiving weight readings (with respective MAC addresses); and s2128: collating weight readings with a transaction (i.e. the activity record generated), including extracted User ID; send transaction to CCC (cloud-based software) 116.

Finally, the steps performed at the CCC (Cloud based software) 116 may comprise: s2130: receive the transaction for the user (i.e., associated with the extracted User ID). The transaction may then be processed.

A consequence is that items/assets removed or replaced by a user may be associated with that user (ID) on a per compartment basis.

### Asset tag - mode control

There is a need for improved techniques for determining whether an asset (such as a tool or other reusable item), stock item or other dispensable article is present within a dispensing enclosure, such as a cabinet, for example a lockable cabinet with access control. There is further a need to ensure that asset tags 602 remain operational for as long as possible, for example by reducing power consumption and energy depletion.

Figure 23 shows the operations performed at the asset tag 602 (see Fig. 13(b), cabinet controller 1012 (R-Pi) - Gateway and optionally a PDA (App) / wireless portable device 201 in a mode control process, in an embodiment.

In an embodiment, the asset tag 602 is operable in one some or all of the modes in Table 1.

**Table 1**

| Mode 1 (dormant) | | Mode 2 (heartbeat) | | Mode 3 (active) | | Mode 4 (tracking) | |
|---|---|---|---|---|---|---|---|
| | • No IR detected | | • IR has been flashed 6 times | | • IR has been bleached for 1 minute | | User has sent NFC command ('track') to tag via PDA |
| | • No Bluetooth beaconing at all | | | | | | |
| | | | | | • Beacon indefinitely 5 times every 4 seconds | | |
| | | | • Beacon (for 3 minutes) 5 times every 4 seconds | | | | |
| | • Bluetooth is off | | | | | | • Beacon indefinitely 5 times every 3 seconds |
| | • Low power mode (sleep) | | | | • Normal transmit (tx) power (0db) | | |
| | | | | | | | • High transmit (tx) power (4db) |
| | | | • Normal transmit power (tx) (0db) | | | | |

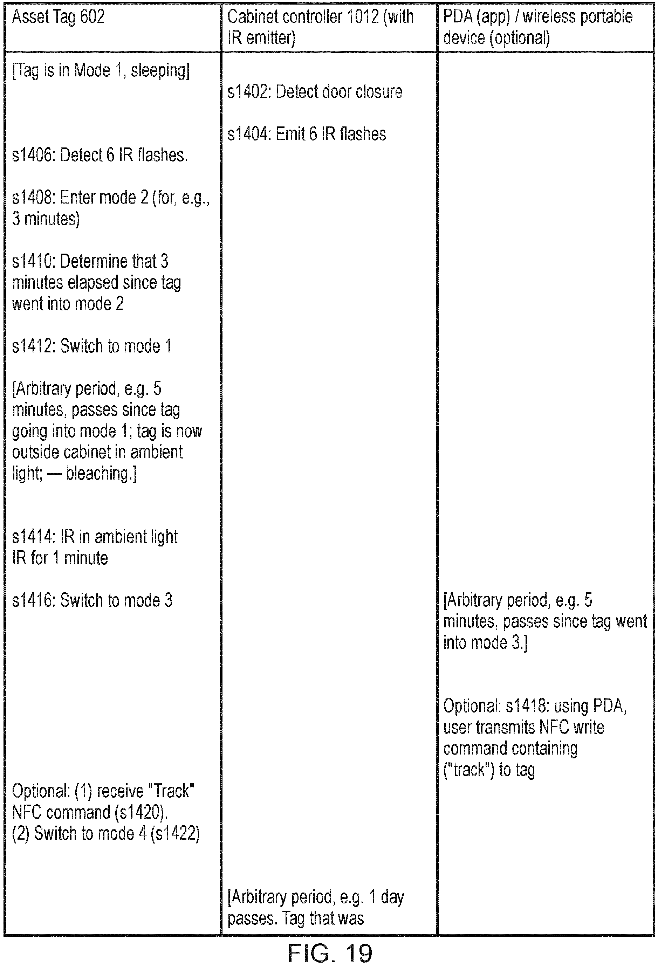

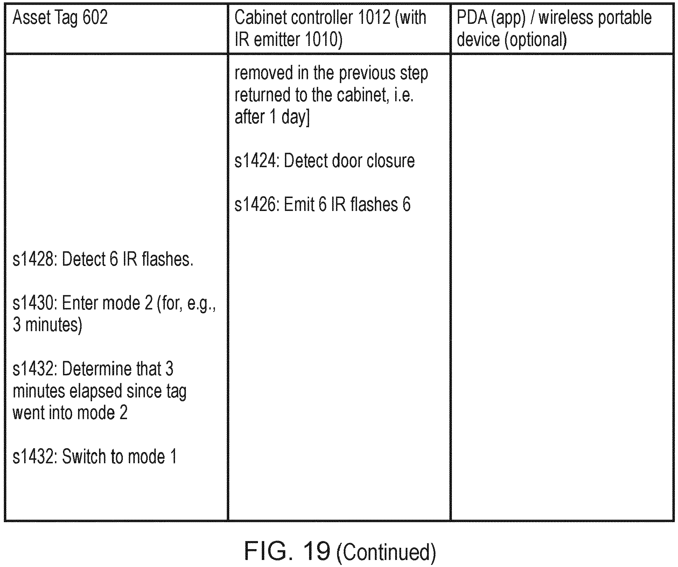

**Figure 19** shows the operations performed at the asset tag 602, cabinet controller 1012 - (internal) gateway and optionally a PDA (App) / wireless portable device in a mode control process, in an embodiment. In the illustrated processes, not all steps may be essential, and it will be appreciated that one or more of the steps may be performed in a different order. Each step has an `s' as a suffix.

The steps performed at the cabinet controller 1012 (Fig. 10(b)) may comprise: s1402: detecting door closure (e.g., using door sensor 1008); and s1404: emitting 6 IR flashes (e.g., using I/R emitter 1010). Although the optical signal may comprise 6 pulses of IR, any suitable number of pulses may be used (e.g., 2-10, or 4 to 8), or a distinctive non-pulsed signal.

The steps performed at the asset tag 602 (Figs 13(a) and 13(b)) may comprise: s1406: detecting the 6 IR flashes; s1408: entering mode 2 (for, e.g., 3 minutes or any other suitable predetermined period); s1410: determining that 3 minutes (or any other suitable predetermined period) elapsed since tag went into mode 2; s1412: switching to mode 1. [After an arbitrary period, e.g., 5 minutes (or any other suitable predetermined period), passes since tag going into mode 1, the tag 602 is now outside cabinet in ambient light - resulting in bleaching.]. The steps performed at the asset tag 602 may then comprise: s1414: detecting IR in ambient light for 1 minute (or any other suitable predetermined period); and in response, s1416: switching to mode 3. Although the period may comprise 1 minute, any suitable period may be used (e.g., 20 sec to 5 minutes, or 30 sec to 2 minutes).

[Optionally, a portable wireless device (such as a PDA or smartphone; not shown) may be programmed by a user (e.g., via a GUI) to switch an asset tag 602 to a certain mode (e.g., among the modes disclosed herein), such as a Track mode - in order to track the asset tag 602. Thus, while the asset tag 602 is in Mode 3, the steps performed at the portable wireless device may comprise: s1418: transmitting an NFC write command containing ("track") to asset tag 602.

The steps performed at the asset tag 602 (Figs 13(a) and 13(b)) may then comprise: s1420: receiving the "Track" NFC command; and s1422: switching to mode 4. The asset tag 602 is thus in a mode involving a higher transmit power (for its beaconing signal), thus facilitating tracking of its location.]

An arbitrary period, e.g., 1 day, may pass. The asset tag 602 that was removed in the previous step has been returned to the cabinet, i.e., after 1 day. The steps performed at the cabinet controller 1012 (Fig. 10(b)) may then comprise: s1424: detecting door closure; and s1426: emitting 6 IR flashes. Although the optical signal may comprise 6 pulses of IR, any suitable number of pulses may be used (e.g., 2-10, or 4 to 8), or any distinctive non-pulse signal.

The steps performed at the asset tag 602 may then comprise: s1428: detecting 6 IR flashes; s1430: entering mode 2 (for, e.g., 3 minutes (or any other suitable predetermined period)); s1432: determining that 3 minutes (or any other suitable predetermined period) elapsed since tag went into mode 2; and s1434: switching to mode 1. Although the period may comprise 3 minutes, any suitable period may be used (e.g., 1 to 10 minutes, or 2 to 5 minutes).

In this way, it can be ensured that an asset tag 602 is in an optimal mode, or in a mode at a given time, or for a given period, that ensures depletion of battery energy on the asset tag 602 is minimised.

A tracking device may include a PDA that looks for beacon messages and the strength that it receives them. If there are more beacon messages received, the user has a better idea (determined/indicated by the PDA) of whether they are getting hotter/colder. If for example there is a beaconing rate of once every minute, the PDA will receive the beacon message at one minute, and the user will have to move in a direction and wait another minute before they find out if they are closer/further away.

In particular embodiments the configuration of various elements is as follows.

Each individual iBin BLE, IBin Lid and may comprise of an independent weight sensor inside an extruded housing which may contain the electronics including a BLE (Bluetooth Low Energy) module for wireless communication with NFC capability for app interaction and a lithium battery, so all 'IBins' are autonomous. A battery powered bin enables the iBin to be placed anywhere within the range of the Bluetooth gateway (access point), enhancing the flexibility of real time inventory control.

With battery power and wireless connectivity, the flexibility of usage of the iBin BLE, Lid & Pro on the customers' shop floor is greatly enhanced. An individual iBin may be moved from manufacturing cell to manufacturing cell and continue to work seamlessly up to 400 metres (with Bluetooth 5.0 in line of sight)) of the nearest BLE gateway (access point). In addition, racks of 'iBins' can be on wheels and moved around factories and MRO (Maintenance Repair and Overhaul) facilities, so inventory can be moved to point-of-use easily.

In particular embodiments the configuration of various elements is as follows.
1. Scanning the NFC with an app may change pre-programmed parameters in the BLE module, including one or more of:
   a. The iBinBLE may be two-way communications to receive firmware updates.
   b. A beacon frequency i.e., the number of times the module beacons to a gateway or app, may be modified.
   c. Reset the bin to reorder after filled. (This may also be automatic with additional weight added.) However, this introduces an improved process as it is known that the bin has been restocked by the restocker and not a user returning product to the bin. The app may be used by the restocker and the button pressed for issuance and returns. The app can also scan the bin to issue to a job number or the tail of a plane.
   d. The sensors, e.g., temperature sensor and accelerometer, may be turned on and off.
   e. Modify tuning of the accelerometer.
   f. Activate a weight sensor reading for a predetermined period.
2. An accelerometer will be fitted to iBinBLE again to conserve battery but initiate readings when product is refilled, returned or issued, i.e., it doesn't have to read all of the time.

In particular embodiments the configuration of various elements is as follows.

A user entry point is provided that can be monitored by a reed switch or microswitch. When the lid is lifted, the beacon may be activated to read the weight sensor and broadcast the information to the BLE gateway. This means the BLE module consumes less power as it can be turned off between events. This extends the life of the device significantly in the field between battery changes or recharges. The lid on bins in weight sensor unit eliminates the requirement to read all the bins within a weight sensor vending machine when the access door has been opened. Even a quantity of iBin Lids on an open rack no longer need to be on, waiting for a change in weight. The beacon is only activated when the reed switch is triggered. Only the bins that are accessed by the user need to be read. This reduces the number of messages that the BLE gateway needs to manage per transaction as all the bins within the solution do not need to be read. It also decreases the noise from erroneous readings of light items that trigger changes in measurement when there have been no transactions, thus increasing the inventory accuracy of the entire cabinet (vending solution). The lid is superior to an accelerometer as the accelerometer may initiate readings due to a passing truck, or nearby bins being restocked.

In other particular embodiments the configuration of various elements is as follows.

With regard to the accelerometer and light sensor, they may be used to change beaconing rates when not moving/ moving, light or dark. However, they could also change signal strength rates which has a number of advantages:
1. When an asset tag is scanned with the app into a cabinet or lockers it may reduce the frequency of beaconing and reduce the (RISS signal strength) as the asset is secured and is beaconing to a local gateway in the hardware. When the asset is scanned into access-controlled hardware. The NFC scan may also activate a parameter so that at predetermined intervals two-way communications is established with the asset tag and gateway. This will allow over-the-air firmware updates in a controlled environment, i.e., asset isn't moving. With lockers, access to the asset may be stopped until the firmware update is complete.
2. Same as above but the accelerometer drives the changes when the asset is stationary other than it knowing it is in a cabinet or lockers. This would be established when there is two-way communications and the cloud-based software would know that the gateway the asset tags are associated with are within lockers or a cabinet from the gateway ID.
3. With the light sensor, the reading could be activated when it goes dark (but going dark wouldn't necessarily associate it to be within lockers or a cabinet e.g., could just be night time. Adding an infrared light to the lockers and cabinet that comes on momentarily could also be the trigger to reduce beaconing rates and signal strength to conserve battery.
4. Adding the light sensor allows the asset tag to know it's in a cabinet or lockers without scanning or using two-way communications on the gateway. The strongest beacon strength to the gateway does though automatically verify which cabinet/lockers the asset is held in. If there are antennae on every shelf or in every locker it could even identify which shelf the asset is held in within the cloud-based software. This is useful for a search function (where a user enters a stock item or its code at his portable wireless device, and seeks to find it at a dispensing station or within a factory or site) and pick by light functionality in lockers and cabinets.
5. When an asset tag is taken out of a non-glazed cabinet or locker, the increase in intensity of light from dark may automatically increase signal strength and beacon frequency so the asset can be tracked.
6. The accelerometer may automatically increase signal strength and beacon frequency so the asset can be tracked across the site. Combining with a light sensor may allow an additional automatic and intermediate beacon rate. So, when not moving but the area is lit as it's been worked in (even at night). The beacon rate could reduce to the slowest tracking rate e.g., every 8 seconds, when it's on the move every 4 seconds and when put in a cabinet a longer period e.g., every half an hour (determined by infrared light on door closing event).

A significant benefit of a weight sensor bin going into lockers or a cabinet that uses infrared to trigger reading from a door closing event is that it significantly reduces the cost of assembly time in the manufacture of the cabinet/lockers due to reduced wiring compared to a hard-wired cabinet.

The app can inform the cloud-based software where an iBin BLE weight sensor bin or asset tag is on a shelf or locker at set up, so a planogram can be built in the cloud-based software. The shelf gateway can confirm that it is on the correct shelf/locker - automated checking. Any anomalies e.g., different gateway reading the tag bin (indicating wrong shelf/locker) can be reported on and fed back to the installer via the app. Location identification of consumable in iBinBLE and Smartie asset tags is required for searching for products.

While embodiments have been described by reference to embodiments of stock monitoring systems having various components in their respective implementations, it will be appreciated that other embodiments make use of other combinations and permutations of these and other components.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, unless otherwise specified, the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

All publications, patents, and patent applications cited herein are hereby incorporated by reference.

Any discussion of prior art in this specification should in no way be considered an admission that such prior art is widely known, is publicly known, or forms part of the general knowledge in the field.

In the claims below and the description herein, any one of the terms "comprising", "comprised of" or "which comprises" is an open term that means including at least the elements/features that follow, but not excluding others. Thus, the term "comprising", when used in the claims, should not be interpreted as being limitative to the means or elements or steps listed thereafter. For example, the scope of the expression "a device comprising A and B" should not be limited to devices consisting only of elements A and B. Any one of the terms "including" or "which includes" or "that includes" as used herein is also an open term that also means including at least the elements/features that follow the term, but not excluding others. Thus, "including" is synonymous with and means "comprising".

Similarly, it is to be noticed that the term "coupled", when used in the claims, should not be interpreted as being limitative to direct connections only. The terms "coupled" and "connected," along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other. For example, in the context of airflow, where an outlet of A is coupled to an inlet of B it may be that one or more additional devices are provided between the outlet of A and the inlet of B.

Thus, while there has been described what are believed to be the preferred embodiments of the invention, those skilled in the art will recognize that other and further modifications may be made thereto without departing from the scope of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

There may be additionally provided the following.

### Lidded shelf

J1. A multi-compartment dispensing unit, comprising:
   a housing;
   a main body disposed within the housing and having an upper surface and a lower surface, the lower surface of the main body being disposed on and supported by a weight sensor arrangement within the housing, and wherein a plurality of compartments are disposed in an array in the main body;
   a plurality of compartment lids disposed on or near the upper surface, wherein each compartment lid is disposed at a respective opening of each compartment in the upper surface, each compartment lid being rotatable about an axis parallel to the plane of the upper surface between a closed position, in which the compartment lid closes and/or seals a respective compartment, and a fully or partially open position;
   wherein, for each compartment, there is provided
   an electronically actuatable retention mechanism configured to releasably retain the compartment lid in the closed position; and
   compartment circuitry including a compartment processing circuitry configured to provide a release command to actuate the retention mechanism and thereby release the compartment lid.
J2. The dispensing unit of paragraph J1, wherein:
   for each compartment, there is provided a shortrange (e.g., NFC) receiver;
   the compartment processing circuitry is configured to, in response to a portable wireless device being tapped on or placed in proximity to the shortrange receiver by a user, (i) receive a compartment open command from the portable wireless device and (ii) issue the release command to actuate the retention mechanism and thereby release the compartment lid.
J3. The dispensing unit of paragraph J1, wherein:
   for each compartment, there is provided a manually operable release button;
   the compartment processing circuitry is configured to, in response to actuation of the manually operable release button by a user, issue the release command to actuate the retention mechanism and thereby release the compartment lid.
J4. The dispensing unit of paragraph J1, J2 or J3, wherein:
   for each compartment, the compartment circuitry includes
      a shortrange (e.g., BLE) transceiver coupled to the compartment processing circuitry; and
   a lid closure sensor, coupled to the compartment processing circuitry, the lid closure sensor being configured to output a lid close signal indicative of the compartment lid having been moved by a user from the open position to the closed position;
   wherein the compartment processing circuitry is configured to, in response to receipt of the lid close signal, transmit a compartment designation signal via the shortrange transceiver, the compartment designation signal comprising (i) the compartment ID of the compartment for which the lid close signal was received and (ii) the release command to actuate the retention mechanism.
J5. The dispensing unit of any of paragraphs J1 to J4, further comprising:
   dispensing unit circuitry, the dispensing unit circuitry comprising dispensing unit processing circuitry and, coupled thereto, the weight sensor arrangement;
   wherein the weight sensor arrangement is configured to provide to the dispensing unit processing circuitry a weight sensor reading indicative of the current weight of the main body.
J6. The dispensing unit of paragraph J5, when dependent upon paragraph J4, wherein the dispensing unit processing circuitry is configured to:
   receive the compartment designation signal;
   in response to receipt of the compartment designation signal, extract the compartment ID;
   receive the weight sensor reading from the weight sensor arrangement; and
   associate the extracted compartment ID with the weight sensor reading and optionally store in a memory of the dispensing unit circuitry the extracted compartment ID in association with the weight sensor reading.
J7. The dispensing unit of paragraph J6, wherein the dispensing unit processing circuitry is configured to:
   receive a report activity command; and
   in response to the report activity command, transmit an activity message via the shortrange (e.g., BLE) transceiver, the activity message comprising, for each compartment for which a compartment designation signal was received and a respective weight sensor reading received, the compartment ID in association with the respective weight sensor reading.
J8. The dispensing unit of any of paragraphs J1 to J8, further comprising a battery;
   wherein the dispensing unit circuitry, the compartment circuitry or all electronic components of the dispensing unit are connected to and powered by the battery.
J 9. The dispensing unit of paragraph J8, wherein the dispensing unit circuitry further comprises:
   an optical sensor, the dispensing processing circuitry, the optical sensor being configured to output electrical signals in response to the receipt of optical signals; and
   the dispensing processing circuitry is configured to receive a first electrical signal from the optical sensor in response to the receipt thereby of a first optical signal, the first electrical signal constituting the report activity command.
J10. The dispensing unit of paragraph J9, wherein the first optical signal comprises a train of N1 optical pulses, where (i) N1 is in the range 4-8 or (iii) N1 is in the range 5-7, or (iii) N1 is 6.
J11. The dispensing unit of any of paragraphs J9 to J10, wherein (i) the optical sensor is an infrared (IR) light sensor and/or (ii) the first optical signal is an IR optical signal.
J12. The dispensing unit of any of paragraphs J1 to J11, wherein the retention mechanism comprises, for each compartment, a spring biassing element for biassing the lid into the open position.
J13. The dispensing unit of any of paragraphs J1 to J12, wherein the retention mechanism comprises, for each compartment:
   a first engagement element disposed on the compartment lid;
   a retaining device on the main body and compartment;
   wherein the retaining device is configured whereby, when a compartment lid is in the closed position, a second engagement element of the retaining device engages the first engagement element and thereby retains the compartment lid in the closed position.
J14. The dispensing unit of paragraph J13, wherein each first engagement element (i) is integral with a respective compartment lid, (ii) comprises a projection having an L-shaped profile, (iii) comprises a flat main part and a transverse projection extending in a plane perpendicular to the plane of the flat main part and/or (iii) comprises a hole or hook therein for engagement by the second engagement element.
J15. The dispensing unit of paragraph J13, wherein each first engagement element comprises a L-shaped projection, the short part of the "L" being disposed at the distal end of the L-shaped projection.
J16. The dispensing unit of paragraph J13, J14 or J15, wherein the second engagement element comprises a rod-like member movable, in use, along the axis of elongation thereof.
J17. The dispensing unit of any of paragraphs J13 to J16, wherein the retaining device comprises a solenoid, and the second engagement element is the armature of the solenoid.
J18. The dispensing unit of any of paragraphs J15, or of paragraph J16 or J17 when dependent upon paragraph 15, wherein, when the compartment lid is in the closed position the second engagement element abuts the long part of the "L" and prevents movement of the short part of the "L" in a direction parallel to the plane of the long part of the "L".
J19. The dispensing unit of any of paragraphs J13 to J18, wherein the compartment processing circuitry coupled to the retaining device and is configured to provide, as the release command, a drive signal for activating a retaining device for moving the second engagement element out of engagement with the first engagement element, thereby freeing a respective compartment lid for movement and thereby release the compartment lid.
J20. The dispensing unit of any of paragraphs J1 to J19, wherein (i) the short-range wireless receiver comprises a NFC interface and/or (ii) the short-range wireless transceiver comprises a Bluetooth interface or a Bluetooth Low Energy, BLE, interface.
J21. The dispensing unit of any of paragraphs J1 to J20, wherein a space is defined between the main body and the housing and below the main body; and the dispensing unit circuitry and/or the weight sensor arrangement are disposed in the space.
J22. The dispensing unit of any of paragraphs J1 to J21, wherein the weight sensor arrangement comprises (i) a plurality of load cells, (ii) a plurality of strain gauge load cells, and/or (iii) a load cell at or adjacent each of four corners of the housing.
J23. The dispensing unit of any of paragraphs J1 to J22, further comprising, disposed at the sides of the housing thereof, one or more mounting brackets, bores or screw holes configured for cooperating with one or more respective mounting elements of a cabinet.
J24. A dispensing cabinet, the dispensing cabinet comprising:
   a cabinet housing;
   one or more dispensing units according to any of paragraphs J1 to J20 disposed on one or more of the shelves of the cabinet housing or mounted directly to interior parts of the cabinet housing;
   a door mounted on the housing, whereby the door is openable and closable by a user;
   a door sensor configured to output a door close signal in the event of the door transitioning from open to closed;
   an optical transmitter configured to transmit optical signals; and
   a cabinet controller, the controller being connected to the door sensor and to the optical transmitter;
   wherein the controller is configured to
      receive the door close signal;
      in response to the door close signal, transmit the first using the optical transmitter.
J25. The dispensing cabinet of paragraph J24, wherein the first optical signal comprises a train of N1 optical pulses, where (i) N1 is in the range 4-8 or (iii) N1 is in the range 5-7, or (iii) N1 is 6.
J26. The dispensing cabinet of any of paragraphs J9 to J10, wherein (i) the optical transmitter is an infrared (IR) light emitter or (ii) an IR LED and/or (iii) the first optical signal is an IR optical signal.
J27. The dispensing cabinet of any of paragraphs J24 to J26, wherein the door is a glazed door incorporating a transparent pane.
J28. The dispensing cabinet of any of paragraphs J24 to J26, wherein the door is a solid and/or non-transparent door.
J29. The dispensing cabinet of paragraphs J28, wherein the first electrical signal is a zero-level signal corresponding to an absence of an optical signal.
J30. The dispensing cabinet of any of paragraphs J24 to J29, wherein the cabinet controller has a secondary power source, whereby the cabinet controller is configured to cause the emission of the first optical signal and/or the second optical signal using the optical transmitter in the absence of power from a mains power source.
J31. The dispensing cabinet of paragraph J30, wherein the secondary power source is a battery.
J32. The dispensing cabinet of any of paragraphs J24 to J31, wherein the cabinet controller comprises a wireless gateway.
J33. The dispensing cabinet of any of paragraphs J24 to J32, wherein the cabinet controller includes or is connected to a first wireless receiver or first wireless transceiver;
   wherein the cabinet controller is configured to receive weight sensor readings received wirelessly via the first wireless receiver or first wireless transceiver.
J34. The dispensing cabinet of paragraph J33, wherein the first wireless receiver or first wireless transceiver is a Bluetooth Low Energy (BLE) receiver or transceiver, respectively, and the wireless signals are BLE signals.
J35. The dispensing cabinet of paragraph J33, further comprising an access control device, the access control device being configured to receive from the user a user ID prior to the door being opened by the user and to transmit the user ID to the cabinet controller;
   wherein the cabinet controller is configured to:
      receive the activity message via the first wireless receiver or first wireless transceiver;
      extract from the activity message activity data, the activity data comprising, for each compartment for which a compartment designation signal was received and a respective weight sensor reading received, the compartment ID in association with the respective weight sensor reading;
   associate the user ID with activity data; and
   transmit an activity log to a remote computer via a network, the activity log comprising the user ID in association with the respective with activity data.
J36. The dispensing cabinet of paragraph J35, wherein the controller includes or is connected to a cellular transceiver or wired network transceiver, and the controller is configured to transmit the activity data via the cellular transceiver or wired network transceiver.

### Mode control

K1. An asset tag adapted to be mounted to an asset, the asset tag comprising:
   a wireless interface configured to transmit a wireless signal with a predetermined periodicity, the wireless signals including the tag ID;
   an optical sensor configured to receive optical signals and output electrical signals;
   processing circuitry, coupled to the wireless interface and to the optical sensor;
   a battery, wherein the wireless interface, optical sensor, and/or processing circuitry are connected to and powered by the battery;
   wherein the processing circuitry is configured to operate the asset tag, at a given time, in one of at least two modes, the least two modes comprising (i) a sleep mode in which the wireless interface is off, preferably such that the asset tag consumes low or substantially zero power and (ii) a first transmit mode in which the asset tag transmits first wireless signals with a first transmit power and optionally a first periodicity, such that the power consumed by the asset tag is higher in the first transmit mode than in the sleep mode;
   wherein the wherein the processing circuitry is configured to
   receive a first electrical signal from the optical sensor in response to the receipt thereby of a first optical signal;
   in response to the first electrical signal, switch from the sleep mode to the first transmit mode;
   determine whether a first predetermined period has elapsed since the last switch from the sleep mode to the first transmit mode; and
   in response to determining that the first predetermined period has elapsed since the last switch from the sleep mode to the first transmit mode, switch from the first transmit mode to the sleep mode.
K2. The asset tag of paragraph K1, wherein, in the first transmit mode, processing circuitry is configured to transmit the first wireless signals with a first periodicity for a second predetermined period.
K3. The asset tag of paragraph K2, wherein in the second predetermined period (i) in the range 1 to 5 minutes, (ii) in the range 2 to 4 minutes or (iii) is 3 minutes.
K4. The asset tag of paragraph K1, K2 or K3, wherein the at least two modes further include (iii) a second transmit mode in which the processing circuitry is configured to transmit second wireless signals with a second transmit power, such that the power consumed by the asset tag is lower in the sleep mode than in the second transmit mode.
K5. The asset tag of paragraph K4, wherein the second transmit power is equal to the first transmit power.
K6. The asset tag of paragraphs K4 or K5, wherein, in the second transmit mode, the processing circuitry is configured to transmit the second wireless signals with the first periodicity and/or indefinitely.
K7. The asset tag of paragraph K4, K5 or K6, wherein the processing circuitry is configured to switch the asset tag to the second transmit mode in response to detecting, while in the sleep mode, IR light in ambient light using the optical sensor.
K8. The asset tag of any of the preceding paragraphs, wherein the at least two modes further include (iv) a third transmit mode in which the processing circuitry is configured to transmit third wireless signals with a third transmit power, such that the power consumed by the asset tag is lower in the first and/or second transmit mode than in the third transmit mode.
K9. The asset tag of paragraph K8, wherein the processing circuitry is configured to transmit third wireless signals with a second periodicity, higher than the first periodicity, and/or indefinitely.
K10. The asset tag of paragraph K2 or K6, or any paragraph dependent thereon, wherein, in the first periodicity is every 4 seconds, and/or the second periodicity is every 3 seconds.
K11. The asset tag of any of the preceding paragraphs, wherein the first transmit power is OdB, the second transmit power is 0dB and/or the third transmit power is 4dB.
K12. The asset tag of any of the preceding paragraphs, wherein the wireless interface comprises a Bluetooth Low Energy, BLE, interface.
K13. The asset tag of any of the preceding paragraphs, further comprising a short-range wireless receiver or transceiver, coupled to the processing circuitry, wherein the processing circuitry is further configured to:
   receive via the short-range wireless receiver or transceiver in response to a wireless portable device being tapped on or placed in proximity thereto, a write command, the write command including a track indicator indicating that the asset tag is to enter a tracking mode;
   in response to receipt of the write command, switching the asset tag to the third transmit mode.
K14. The asset tag of paragraph K12, wherein the short-range wireless receiver or transceiver comprises a near field communication, NFC, receiver or transceiver.
K15. A dispensing enclosure, the dispensing enclosure comprising:
   a housing;
   one or more assets disposed within the housing, the or each asset having an asset tag according to any of paragraphs K1 to K14 mounted thereon;
   a door mounted on the housing, whereby the door is openable and closable by a user;
   a door sensor configured to output a door close signal in the event of the door transitioning from open to closed and optionally a door open signal in the event of the door transitioning from closed to open;
   an optical transmitter configured to transmit optical signals; and
   a controller, the controller being connected to the door sensor and to the optical transmitter;
   wherein the controller is configured to
      receive the door close signal;
      in response to the door close signal, transmit the first optical signal using the optical transmitter.

## Claims

1. A system for monitoring the presence and/or quantity of stock items in a dispensing enclosure, the system comprising:
the dispensing enclosure, the dispensing enclosure having a cabinet controller and having one or more dispensing units or one or more weight sensor units, WSU, disposed therein, the or each weight sensor unit being configured to wirelessly transmit using a transmission device one or more weight sensor readings indicative of the weight being supported by the weight sensor unit, the dispensing unit comprising a container configured to receive or support the stock items and a weight sensor unit configured to support, in use, the container;
a wireless portable device having a first processor, a short-range wireless transceiver and a long-range wireless transceiver;
a central control computer coupled to the cabinet controller and to the long-range wireless transceiver via one or more networks;
wherein the first processor is configured to:
in response to the wireless portable device being tapped on or placed in proximity to a short-range wireless transceiver of a weight sensor unit, receive (s1710) a WSU ID for that weight sensor unit; and
send (s1712) a first notification message to the central control computer, the notification message including the WSU ID and indicating that the WSU associated with the WSU ID is in the dispensing enclosure;
wherein the central control computer is configured to, in response to receiving the first notification message, send (s1716) a second notification message to the cabinet controller indicating that the WSU associated with the WSU ID is in the dispensing enclosure;
wherein the cabinet controller is configured to:
detect (s1718) a door close signal in response to a door of the dispensing enclosure being closed, and
transmit (s1720) a first optical signal using an optical transmitter;
wherein the WSU associated with the WSU ID is configured to, in response to receipt thereby of a first optical signal, wirelessly transmit a first weight sensor reading to the cabinet controller.

2. The system of claim 1, wherein the first processor is configured to, prior to or after receiving (s1710) the WSU ID, receive a user selection of a cabinet ID corresponding to the dispensing enclosure, after displaying a new WSU configuration screen on a display of the wireless portable device.

3. The system of claim 2, wherein the first processor is configured to, prior to or after receiving user selection of the cabinet ID, receive a user selection of a product ID in the new WSU configuration screen, the product ID corresponding to stock items in a container supported by the WSU.

4. The system of claim 2 or 3, wherein the first notification message further comprises (i) a device ID of the wireless portable device and/or (ii) the cabinet ID, and optionally the time and date of installation of the WSU in the enclosure.

5. The system of any of claims 1 to 4, wherein the central control computer is configured to, in response to receiving the first notification message:
extract the cabinet ID and the WSU ID, and optionally the product ID and optionally the time and date of installation; and/or
wherein the second notification message comprises the WSU ID and an indicator indicating that the WSU associated with the WSU ID is in the dispensing enclosure, and optionally the product ID and optionally the time and date of installation.

6. The system of any of the preceding claims, wherein the dispensing enclosure includes an internal gateway, and signals or messages are received by the cabinet controller from the transmission device of any WSUs, including the newly installed WSU, via the internal gateway.

7. The system of any of the preceding claims, wherein the cabinet controller is configured to, in response to receiving the first notification message, store in a local memory device the WSU ID and an indicator indicating that the WSU associated with the WSU ID is in the dispensing enclosure, and to optionally store in a local memory device the product ID and optionally the time and date of installation.

8. The system of any of the preceding claims, wherein the cabinet controller is configured to, after receipt of the first weight sensor reading from the WSU:
construct a new WSU received message, the new WSU received message comprising the WSU ID and the first weight sensor reading, and optionally the temperature and battery level of the WSU; and
send (s1728) the new WSU received message to the central control computer.

9. The system of claim 8, wherein the central control computer is configured to store in a local database thereof the first weight sensor reading in association with the WSU ID and optionally in association with a cabinet ID of the dispensing enclosure, the first weight sensor reading being an initial weight sensor reading for the WSU at installation.

10. A wireless portable device for use in the system of any of claims 1 to 9, the wireless portable device comprising:
a first memory configured for storage of programs and data;
a display configured for displaying graphical data;
an input device configured to receive user inputs;
optionally an output device configured to output visual or audible alerts;
the short-range wireless transceiver; and
a first processor, the first memory, display, input device and short-range transceiver being connected to the first processor
wherein the first processor is configured to:
in response to the wireless portable device being tapped on or placed in proximity to a short-range wireless transceiver of a weight sensor unit, receive a WSU ID for that weight sensor unit; and
send a first notification message to the central control computer, the notification message including the WSU ID and indicating that the WSU associated with the WSU ID is in the dispensing enclosure.

11. A weight sensor unit, WSU, for use in the system of any of claims 1 to 9, the weight sensor unit comprising:
a weight sensor configured to output weight sensor readings indicative of the weight being supported by the weight sensor;
a transmission device configured to transmit wireless signals;
an optical sensor configured to output electrical signals in response to the receipt of optical signals; and
a short-range wireless transceiver;
a second processor, coupled to the weight sensor, optical sensor and the transmission device; and
a battery, wherein at least the weight sensor, optical sensor, transmission device, short-range wireless transceiver and second processor are powered by the battery;
wherein the second processor is configured to:
in response to the wireless portable device being tapped on or placed in proximity to the short-range wireless transceiver, transmit (s1710) the WSU ID of the weight sensor unit;
receive a first electrical signal from the optical sensor in response to the receipt thereby of a first optical signal;
receive a first weight sensor reading output by the weight sensor, and
wirelessly transmit the first weight sensor reading using the transmission device.

12. The weight sensor unit of claim 11, wherein the second processor is configured to:
receive a second electrical signal from the optical sensor in response to the receipt thereby of a second optical signal; and
after receipt of the second electrical signal, transmit a second weight sensor reading wirelessly using the transmission device.

13. The weight sensor unit of claim 11 or 12, wherein (i) the transmission device is configured to be operated in one of at least a first state in which the transmission device consumes power P1, and in a second state, in which the transmission device consumes power P2, wherein P2 is greater than P1, and preferably wherein the second processor is configured to switch the transmission device from the first state to the second state only after only after receipt (i) the first optical signal and/or (ii) the second optical signal, and preferably wherein in the first state the transmission device is in deactivated mode, and in the second state the transmission device is in activated mode whereby it is able to transmit the wireless signals, and preferably wherein (i) the transmission device is a Bluetooth Low Energy (BLE) transmitter, and the wireless signals are BLE signals or (ii) the transmission device is an ultra wide band (UWB) transmitter, and the wireless signals are UWB signals.

14. A dispensing enclosure for use in the system of any of claims 1 to 9, the dispensing enclosure comprising:
a housing;
one or more shelves mounted internally within the housing;
one or more of the weight sensor units according to any of claims 11 to 13, disposed on one or more of the shelves;
a door mounted on the housing, whereby the door is openable and closable by a user;
a door sensor configured to output (i) a door open signal in the event of the door transitioning from closed to open and/or (ii) a door close signal in the event of the door transitioning from open to closed;
an optical transmitter configured to transmit optical signals; and
a cabinet controller, the controller being connected to the door sensor and to the optical transmitter;
wherein the controller is configured to
receive the door close signal;
in response to receipt of the door close signal, transmit a first and/or second optical signal using the optical transmitter.

15. A system for monitoring the presence and/or quantity of stock items in a dispensing enclosure, the system comprising:
the dispensing enclosure having a cabinet controller and having one or more dispensing units or one or more weight sensor units disposed therein, the or each weight sensor unit (WSU) being configured to wirelessly transmit using a transmission device one or more weight sensor readings indicative of the weight being supported by the weight sensor unit, the dispensing unit comprising a container configured to receive or support the stock items and a weight sensor unit configured to support, in use, the container;
a central control computer coupled to the cabinet controller via one or more networks;
wherein the cabinet controller is configured to, in response to a door of the dispensing enclosure being closed for a first time, transmit a first optical signal using an optical transmitter;
wherein a weight sensor unit is configured to, in response to receipt thereby of the first optical signal, wirelessly transmit a first weight sensor reading to the cabinet controller;
wherein the cabinet controller is configured to, in response to a door of the dispensing enclosure being closed for a second time, transmit a second optical signal using an optical transmitter;
wherein a weight sensor unit is configured to, in response to receipt thereby of the second optical signal, wirelessly transmit a second weight sensor reading to the cabinet controller;
wherein the cabinet controller is configured to, after receipt of the second weight sensor reading, transmit an activity record message to the central control computer, the activity record message being based on at least the second weight sensor reading and comprising (i) a WSU ID of the weight sensor unit and (ii) a current quantity of stock items calculated from the second weight sensor reading and optionally a previous quantity of stock items calculated from the first weight sensor reading, and (iii) optionally one, a subset or all of a temperature of the WSU, a battery charge status of the WSU and the second weight sensor reading.
